(19) Europäisches Patentamt
European Patent Office
Office européen des brevets

(11) **EP 3 490 914 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **17749131.3**

(22) Anmeldetag: **19.07.2017**

(51) Internationale Patentklassifikation (IPC):
**B65G 29/00** (2006.01)    **B23Q 39/04** (2006.01)

(52) Gemeinsame Patentklassifikation (CPC):
**B65G 29/00; B23Q 1/0027; B23Q 3/082; B23Q 39/042;** B65G 47/846

(86) Internationale Anmeldenummer:
**PCT/EP2017/068280**

(87) Internationale Veröffentlichungsnummer:
**WO 2018/019683 (01.02.2018 Gazette 2018/05)**

(54) **TRANSPORTEINRICHTUNG UND VERFAHREN ZUM TRANSPORT VON OBJEKTEN VON ARBEITSSTATION ZU ARBEITSSTATION EINER PRODUKTIONSANLAGE UND PRODUKTIONSANLAGE ZUR HERSTELLUNG VON PRODUKTEN MIT EINER DERARTIGEN TRANSPORTEINRICHTUNG**

TRANSPORT DEVICE AND METHOD FOR TRANSPORTING OBJECTS FROM WORK STATION TO WORK STATION OF A PRODUCTION SYSTEM AND PRODUCTION SYSTEM FOR THE MANUFACTURING OF PRODUCTS WITH A TRANSPORT DEVICE OF THIS TYPE

TRANSPORTEUR ET PROCÉDÉ DE TRANSPORT D'OBJETS DE STATION DE TRAVAIL EN STATION DE TRAVAIL DANS UNE INSTALLATION DE PRODUCTION, ET INSTALLATION DE PRODUCTION DESTINÉE À LA FABRICATION DE PRODUITS ET DOTÉE D'UN TEL TRANSPORTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.07.2016 DE 102016008949**

(43) Veröffentlichungstag der Anmeldung:
**05.06.2019 Patentblatt 2019/23**

(73) Patentinhaber: **Fresenius Medical Care Deutschland GmbH**
**61352 Bad Homburg v.d.H (DE)**

(72) Erfinder: **HEPPE, John**
**66606 St. Wendel (DE)**

(74) Vertreter: **Oppermann, Frank**
**OANDO Oppermann & Oppermann LLP**
**Wilhelminenstrasse 1a**
**65193 Wiesbaden (DE)**

(56) Entgegenhaltungen:
**WO-A1-2009/110072    FR-A5- 2 045 428**
**JP-A- S5 581 028**

EP 3 490 914 B1

**Beschreibung**

Die Erfindung betrifft eine Transporteinrichtung mit einem drehbaren Objektträger, der umfangsmäßig verteilt angeordnete Objekt-Trägerelemente aufweist, auf denen Objekte angeordnet werden, die auf einer kreisförmigen Bewegungsbahn von Arbeitsstation zu Arbeitsstation einer Produktionsanlage transportiert werden. Darüber hinaus betrifft die Erfindung eine Produktionsanlage zur Herstellung von Produkten, insbesondere von mit einem medizinischen Produkt befüllten Behältnissen mit einer derartigen Transporteinrichtung. Des Weiteren betrifft die Erfindung ein Verfahren zum Transport von Objekten von Arbeitsstation zu Arbeitsstation einer Produktionsanlage.

In Produktionsanlagen zur Herstellung von Produkten finden zum Transport der Produkte von Arbeitsstation zu Arbeitsstation Drehtische Verwendung, die auch als Rundtische oder Rundschalttische bezeichnet werden. Die bekannten Rundschalttische weisen einen kreisrunden Objektträger auf, der um eine vertikale Achse drehbar ist. Der Objektträger wird von einer Antriebseinheit angetrieben. Der Objektträger dreht sich während der Produktion in einzelnen Arbeitstakten schrittweise im oder entgegen dem Uhrzeigersinn. Die Arbeitsstationen sind um den Objektträger umfangsmäßig verteilt angeordnet. Die zu bearbeitenden Objekte befinden sich umfangsmäßig verteilt auf dem Objektträger. Durch Drehen des Objektträgers können die Objekte von Arbeitsstation zu Arbeitsstation transportiert werden. Die Arbeitsstationen führen an den Objekten jeweils einen Arbeitsprozess aus, der einen oder mehrere Produktionsschritte umfassen kann. Die Objekte können auf dem Objektträger in Objekt-Trägerelementen angeordnet sein, die ein oder mehrere Objekte aufnehmen. Die Objekte können herzustellende Produkte (Waren) oder zu bearbeitende Werkstücke oder Prüfgegenstände sein.

Die bekannten Rundschalttische verfügen über Objektträger, auf denen die Objekt-Trägerelemente relativ zueinander unbeweglich angeordnet sind. Sie sind in vorgegebenen Abständen umfangsmäßig verteilt auf dem Objektträger befestigt. In Verbindung mit den ortsfesten Arbeitsstationen werden die Objekt-Trägerelemente allein durch die Drehung des Objektträgers in die entsprechende Position gegenüber der jeweiligen Arbeitsstation gebracht. Dort verharren die Objekt-Trägerelemente zwangsläufig solange, bis die Arbeitsstation den Arbeitsprozess durchgeführt hat.

Eine Produktionsanlage verfügt im Allgemeinen über Arbeitsstationen mit unterschiedlichen Prozesszeiten. Dabei wird die schrittweise Drehung des Objektträgers im Wesentlichen durch die Dauer des längsten Prozesses bestimmt. Aufgrund des Stillstandes des Objektträgers während eines Arbeitsprozesses mit einer langen Prozesszeit, der vorgegebenen Abstände der Objekt-Trägerelemente und der schrittweisen Drehung des Objektträgers um einen vorgegebenen Drehwinkel ist auch für die Arbeitsprozesse mit kurzen Prozesszeiten zur Bearbeitung jedes Objektes jeweils eine eigene Arbeitsstation erforderlich. Diese Arbeitsstationen kommen allerdings nur kurz zum Einsatz. Dies ist mit hohen Investitionen und Betriebskosten verbunden und wenig effizient. Zudem steigt mit der Anzahl der Arbeitsstationen die Ausfallwahrscheinlichkeit der Produktionsanlage. Solche Produktionsanlagen zeichnen sich durch eine hohe Komplexität und eine fehlende Zugänglichkeit der Komponenten aus.

Wenn das Produktionsverfahren Arbeitsprozesse mit unterschiedlichen Prozesszeiten umfasst, ist aus den oben genannten Gründen der Einsatz einer Transporteinrichtung von Vorteil, bei dem der Objektträger und die Objekt-Trägerelemente keine starre Anordnung darstellen, so dass einige Objekt-Trägerelemente an Arbeitsstationen mit einer langen Prozesszeit verbleiben können, während andere Objekt-Trägerelemente von Arbeitsstation zu Arbeitsstation transportiert werden können.

Für die Überführung von Medien, beispielsweise Flüssigkeiten oder Gasen, sind Drehdurchführungen bekannt, die über ein feststehendes Bauteil und ein drehbares Bauteil verfügen. Das feststehende Bauteil weist einen Medien-Eingang und das drehbare Bauteil einen Medien-Ausgang auf. In dem feststehenden Bauteil ist ein axialer Kanal ausgebildet, der zu einer radialen Bohrung führt, die gegenüber einem Ringspalt abgedichtet ist, der in dem drehbaren Bauteil ausgebildet ist. Die Abdichtung an den Dichtflächen von dem feststehenden und dem drehbaren Bauteil erfolgt mit den bekannten Gleit- oder Rotationdichtungen. Um mehrerer Fluide überführen zu können, sind auch mehrkanalige Drehdurchführungen bekannt, bei denen in dem feststehenden Bauteil mehrere axiale Kanäle ausgebildet sind, die jeweils eine radiale Bohrung haben, wobei in dem drehbaren Bauteil mehrerer Ringspalte ausgebildet sind. Die mehrkanaligen Drehdurchführungen zeichnen sich aber nur durch ein einziges drehbares Bauteil aus.

Die FR 2 045 428 A5 beschreibt eine Transporteinrichtung zum Transport von Objekten von Arbeitsstation zu Arbeitsstation einer Produktionsanlage mit einem Objektträger, auf dem zwei Objekt-Trägerelemente zur Ablage von Objekten angeordnet sind, wobei der Objektträger in aufeinanderfolgenden Arbeitstakten um seine Mittelachse drehbar ist. Die Objekt-Trägerelemente sind auf dem Objektträger auf einer kreisförmigen Bewegungsbahn relativ zum Objektträger verschiebbar angeordnet und sind mit dem Objektträger mittels einer Friktionseinrichtung verbunden. Den Objekt-Trägerelementen sind ortsfeste Halteelemente zugeordnet, die zwischen einem aktiven Zustand, in dem das Objekt-Trägerelement festgehalten wird, und einem nicht aktiven Zustand, in dem das Objekt-Trägerelement freigegeben wird, bewegbar. Dadurch können die Objekt-Trägerelemente von dem Objektträger mitgenommen und von Arbeitsstation zu Arbeitsstation bewegt werden, oder an einer Arbeitsstation angehalten werden. Die Bearbeitung der Objekte erfolgt mittels ortsfester Spindelstöcke.

Der Erfindung liegt die Aufgabe zugrunde, ein Produktionsverfahren, bei dem Objekte von Arbeitsstation zu Arbeitsstation einer Produktionsanlage transportiert werden, zu verbessern. Insbesondere liegt der Erfindung die Aufgabe zugrunde, eine Transporteinrichtung mit einem drehbaren Objektträger bereitzustellen, die eine flexible Gestaltung des Produktionsprozesses erlaubt. Eine weitere Aufgabe der Erfindung ist eine Produktionsanlage zur Herstellung von Produkten zu schaffen, die einen relativ einfachen Aufbau hat und eine flexible Gestaltung des Produktionsprozesses erlaubt. Der Erfindung liegt auch die Aufgabe zugrunde, ein Verfahren zum Transport von Objekten von Arbeitsstation zu Arbeitsstation anzugeben, das eine flexible Gestaltung des Produktionsprozesses erlaubt.

Die Lösung dieser Aufgaben erfolgt erfindungsgemäß mit den Merkmalen der unabhängigen Patentansprüche. Die abhängigen Ansprüche betreffen vorteilhafte Ausführungsformen der Erfindung.

Die erfindungsgemäße Transporteinrichtung zeichnet sich dadurch aus, dass einem Objekt-Trägerelement oder mehreren Objekt-Trägerelementen ein oder mehrere Aktor-Einheiten zugeordnet sind, die zusammen mit dem Objekt-Trägerelement oder mit den Objekt-Trägerelementen bewegbar sind.

In diesem Zusammenhang werden unter Objekt-Trägerelementen sämtliche Elemente verstanden, auf denen ein oder mehrere Objekte angeordnet oder abgelegt werden können. Die Objekte können auf den Objekt-Trägerelementen lose liegen oder auf den ObjektTrägerelementen fixiert sein.

Unter Aktor-Einheiten werden sämtliche Einheiten verstanden, mit denen auf ein Objekt, das einem Objekt-Trägerelement zugeordnet ist, eingewirkt werden kann oder mit denen Messwerte aufgenommen werden können, sowie sämtliche Einheiten, die der Betätigung von Bauteilen dienen, die für die Steuerung des Prozesses relevant sind. Die Aktor-Einheiten können auf unterschiedliche Art auf die Objekte einwirken, um einzelne Prozessschritte durchzuführen, oder unterschiedliche Messwerte aufnehmen. Beispielsweise können die Einwirkungen physikalisch und/oder chemisch sein. Die Aktor-Einheiten können beispielsweise auf die Objekte Kräfte ausüben.

Da sich die Aktor-Einheiten zusammen mit den Objekt-Trägerelementen drehen, können Prozessschritte an den Objekten, die den Objekt-Trägerelementen zugeordnet sind, direkt an den Objekt-Trägerelementen vorgenommen werden. Eine ortsfeste Anordnung von Aktoren, die von Außen an den Objekten angreifen, ist daher nicht erforderlich. Dadurch wird der gesamte Produktionsprozess flexibler, einfacher, schneller und robuster.

Die den Objekt-Trägerelementen direkt zugeordneten Aktor-Einheiten setzen aber eine Versorgung mit Medien voraus. In diesem Zusammenhang werden unter Medien sowohl gasförmige Medien, beispielsweise Druckluft, als auch flüssige Medien, beispielsweise medizinische Flüssigkeiten, verstanden. Unter einer Versorgung mit einem Medium wird auch eine Energieversorgung verstanden. Im weiteren Sinne werden unter Medien auch elektrische oder elektromagnetische Signale verstanden, insbesondere Steuer-Signale einer Steuereinheit zum Steuern der Aktor-Einheiten oder auch anderer Einrichtungen.

Die Versorgung der Aktor-Einheiten mit Medien kann grundsätzlich dadurch erfolgen, dass die Medien an den Objekt-Trägerelementen bereitgestellt werden. Flüssige oder gasförmige Medien können an den Objekt-Trägerelementen in einem Reservoir bereitgestellt werden. Steuersignale können auch über Funk übertragen werden. Allerdings sind der Bereitstellung der Medien an den Objekt-Trägerelementen Grenzen gesetzt.

Eine bevorzugte Ausführungsform sieht daher eine ortsfeste Versorgungseinrichtung für die Versorgung der Aktor-Einheit oder der Aktor-Einheiten mit einem oder mehreren Medien vor, wobei eine Medien-Zuführeinrichtung vorgesehen ist, die derart ausgebildet ist, dass ein oder mehrere Medien von der Versorgungseinrichtung der Aktor-Einheit oder den Aktor-Einheiten zugeführt werden können. Bei einer besonders bevorzugten Ausführungsform ist die Medien-Zuführeinrichtung als eine Drehdurchführung ausgebildet, mit der sich sämtliche Medien zuführen lassen.

Die erfindungsgemäße Drehdurchführung weist vorzugsweise ein feststehendes Bauteil und mehrere gegenüber dem feststehenden Bauteil unabhängig voneinander um eine gemeinsame Mittelachse drehbare Bauteile auf, die jeweils einen oder mehrere MedienAusgänge aufweisen können. Das feststehende Bauteil und die drehbaren Bauteile sind derart ausgebildet, dass eine Medienverbindung zwischen einem Medien-Eingang des feststehenden Bauteils und einem Medien-Ausgang eines drehbaren Bauteils oder mehreren Medien-Eingängen des feststehenden Bauteils und mehreren Medien-Ausgängen der drehbaren Bauteile hergestellt wird.

Die zentrale Versorgungseinrichtung kann über eine oder mehrere Versorgungsleitungen für die Zufuhr von einem oder mehreren Medien mit dem einen oder den mehreren Medien-Eingängen der Drehdurchführung verbunden sein. Für eine Stromversorgung sind die Versorgungsleitungen Stromleitungen.

Die Drehdurchführung erlaubt die Herstellung einer Verbindung zwischen ObjektträgerElementen zugeordneten Aktor-Einheiten, die auf einer kreisförmigen Bewegungsbahn auf einem Objektträger bewegt werden können oder auf dem Objektträger an einem festen Ort verbleiben können, und einer ortsfesten, zentralen Versorgungseinrichtung, d. h. unabhängig von der Bewegung der Objekt-Trägerelemente. Dadurch kann der Aufbau der Transporteinrichtung sowie der gesamten Produktionsanlage vereinfacht werden. Das Produktionsverfahren kann mit den Objektträger-Elementen zugeordneten Aktor-Einheiten flexibel gestaltet werden. Darüber hinaus vereinfacht sich die Programmierung der Produktionsanlage.

Eine bevorzugte Ausführungsform der Drehdurchführung sieht vor, dass jedes drehbare Bauteil der Drehdurchführung ein Kopplungselement aufweist, das derart ausgebildet ist, dass das drehbare Bauteil an ein Objekt-Trägerelement gekoppelt ist. Das Kopplungselement kann unterschiedlich ausgebildet sein. Allein entscheidend ist, dass das Objekt-Trägerelement, das relativ zum Objekt-Träger beweglich ist, das zugehörige drehbare Bauteil mitnimmt. Bei einer besonders vorteilhaften Ausführungsform ist das Kopplungselement eine Stange oder ein Gestänge.

Eine weitere bevorzugte Ausführungsform der Drehdurchführung sieht vor, dass das feststehende Bauteil als ein zylindrischer Körper ausgebildet ist und die drehbaren Bauteile als das feststehende Bauteil umschließende Körper ausgebildet sind, wobei die drehbaren Bauteile um die Mittelachse des feststehenden Bauteils drehbar übereinander angeordnet sind. Dies führt zu einem kompakten Aufbau der Drehdurchführung.

Wenn die Aktor-Einheiten nur mit einem Medium versorgt werden, beispielsweise mit Druckluft, kann die Drehdurchführung nur einen Medieneingang aufweisen, dem Druckluft zentral zugeführt wird. In dem feststehenden Bauteil können ein oder mehrere axiale Kanäle ausgebildet sein. Jeder axiale Kanal kann eine oder mehrere einem drehbaren Bauteil zugeordnete radiale Bohrungen haben. Jedes drehbare Bauteil kann einen oder mehrere Ringspalte aufweisen, die jeweils zur Übergabe des Mediums gegenüber einer radialen Bohrung abgedichtet sind. Die drehbaren Bauteile können unterschiedliche Formen haben. Ein besonders kompakter Aufbau ergibt sich, wenn die drehbaren Bauteile als ringförmige Körper ausgebildet sind, die jeweils einen oder mehrerer radiale Medien-Ausgänge aufweisen können.

Bei einer bevorzugten Ausführungsform ist die Drehdurchführung derart angeordnet, dass das feststehende Bauteil zentral auf dem Objektträger angeordnet ist oder den Objektträger im Zentrum durchdringt, wobei die drehbaren Bauteile auf gleicher Höhe oder tiefer oder höher in Bezug auf die Objekt-Trägerelemente angeordnet sind. Die Objekt-Trägerelemente können daher um die drehbaren Bauteile umfangsmäßig verteilt angeordnet sein. Folglich kann das Medium den Aktor-Einheiten von oben oder von der Seite zugeführt werden.

Die Objekt-Trägerelemente können jeweils einen oder mehrere Aktor-Einheiten aufweisen, wobei die eine oder die mehreren Aktor-Einheiten für die Zuführung eines oder mehrerer Medien mit dem einen oder den mehreren Medien-Ausgängen eines drehbaren Bauteils über Verbindungsleitungen verbunden sind. Die Verbindungsleitungen können flexible Schlauchleitungen sein. Es können aber auch starre Leitungen vorgesehen sein, die gleichzeitig die Funktion der Kopplungselemente übernehmen können.

Die erfindungsgemäße Transporteinrichtung zeichnet sich weiterhin dadurch aus, dass mindestens einem Objekt-Trägerelement ein Mitnehmerelement und ein Halteelement zugeordnet sind. Das Mitnehmerelement kann einen aktiven Zustand, in dem eine Relativbewegung von Objekt-Trägerelement und Objektträger verhindert wird, und einen nicht aktiven Zustand einnehmen, in dem eine Relativbewegung von Objekt-Trägerelement und Objektträger zugelassen wird. Zwischen diesen beiden Zuständen kann das Mitnehmerelement bewegt bzw. umgeschaltet werden. Das Halteelement kann einen aktiven Zustand, in dem das Objekt-Trägerelement festgehalten wird, und einen nicht aktiven Zustand einnehmen, in dem das Objekt-Trägerelement freigegeben wird. Zwischen diesen beiden Zuständen kann das Halteelement bewegt bzw. umgeschaltet werden.

Die Betätigung des mindestens einen Mitnehmerelements und des mindestens einen Halteelements erfolgt mittels einer Betätigungseinheit. Die Betätigungseinheit für die Mitnehmerelemente und Halteelemente kann über Betätigungsorgane verfügen, mit denen Mitnehmer- und Halteelemente zwischen den beiden Positionen bewegt werden können. Die Betätigungseinheit kann beispielsweise einen elektromotorischen und/oder pneumatischen und/oder hydraulischen Antrieb aufweisen. Derartige Betätigungsorgane stellen auch Aktor-Einheiten dar, die von einer zentralen Versorgungseinrichtung mit Medien versorgt werden können.

Die Betätigungseinheit ist derart ausgebildet, dass in einzelnen Arbeitstakten der aufeinanderfolgenden Arbeitstakte das Mitnehmerelement einen aktiven Zustand und das Halteelement einen inaktiven Zustand einnimmt, so dass das jeweilige Objekt-Trägerelement von dem Objektträger mitgenommen und von Arbeitsstation zu Arbeitsstation bewegt wird. Die Betätigungseinheit ist darüber hinaus derart ausgebildet, dass in einzelnen Arbeitstakten der aufeinanderfolgenden Arbeitstakte, das Mitnehmerelement einen inaktiven Zustand und das Halteelement einen aktiven Zustand einnimmt, so dass das Objekt-Trägerelement an einer Arbeitsstation verbleibt.

In einer weiteren Ausführungsform kann eine Zwangskopplung der beiden Betätigungsorgane derart vorgesehen sein, dass das Betätigungsorgan des Mitnehmerelements betätigt wird, wenn das Betätigungsorgan des Halteelements nicht betätigt wird oder umgekehrt, so dass das zugehörige Objekt-Trägerelement freigegeben oder arretiert wird. Wenn eine derartige Zwangskopplung der Betätigungsorgane vorgesehen ist, sind zwei separate Medienleitungen, beispielsweise Druckluftleitungen, zur Versorgung der Betätigungsorgane nicht erforderlich. Vielmehr ist eine einzige Druckluftversorgung ausreichend. Die Umschaltung kann allein dadurch erfolgen, dass an einem Aktor Druckluft anliegt oder nicht anliegt. Ein Fehlerfall, in dem das Objektträger-Element gleichzeitig freigegeben oder arretiert wird, kann somit nicht auftreten. Dadurch verringert sich die Kollisionsgefahr.

In einer bevorzugten Ausführungsform können beide Betätigungsorgane, nämlich das Betätigungsorgan des Mitnehmerelements und das Betätigungsorgan des Halteelements, mittels eines einzigen Aktors realisiert sein. Zur Steuerung des Objektträger-Elements kann auf diese Weise eine Zwangskopplung der beiden Betätigungsorgane derart vorgesehen sein, dass das Betätigungsorgan des Mitnehmerelements betätigt wird, wenn das Betätigungsorgan des Halteelements nicht betätigt wird oder umgekehrt, so dass das zugehörige Objektträger-Element entweder freigegeben oder arretiert wird. Wenn eine derartige Zwangskopplung der Betätigungsorgane vorgesehen ist, sind zwei separate Medienleitungen, beispielsweise Druckluftleitungen, zur Versorgung der Betätigungsorgane nicht erforderlich, sondern nur noch eine Medienleitung. Bei dem Beispiel der Druckluftleitung kann die Umschaltung mittels eines doppelt wirkenden Druckluftzylinders erfolgen, wobei mittels eines Umschaltventils entweder nur der eine Eingang des Druckluftzylinders oder nur der andere Eingang des Druckluftzylinders mit einer Druckluftquelle verbunden wird und der Druckluftzylinder somit nur das Betätigungsorgan des Mitnehmerelements oder nur das Betätigungsorgan des Halteelements betätigt.

Die Betätigung des mindestens einen Mitnehmer- bzw. Halteelements durch die Betätigungseinheit erlaubt somit eine Bewegung des Objektträgers zum Transport von Objekten zu einer Arbeitsstation mit einer kurzen Prozesszeit, während ein Objekt-Trägerelement an einer Arbeitsstation mit einer langen Prozesszeit verbleibt.

Wenn der gesamte Produktionsprozess mit mehreren Arbeitsprozessen nur einen Arbeitsprozess mit einer langen Prozesszeit umfasst, ist es grundsätzlich ausreichend, wenn nur ein Objekt-Trägerelement auf dem Objektträger in Richtung der Bewegungsbahn, auf der die Objekt-Trägerelemente von Arbeitsstation zu Arbeitsstation transportierbar sind, relativ zum Objektträger verschiebbar angeordnet ist. Dieses Objekt-Trägerelement kann dann bei der Arbeitsstation mit der langen Prozesszeit verbleiben. Bei nur einem Objekt-Trägerelement ist nur ein Mitnehmer- bzw. Halteelement erforderlich. Bei zwei Objekt-Trägerelementen beispielsweise sind mindestens zwei Mitnehmer- bzw. Halteelemente erforderlich, wenn die beiden Trägerelemente unabhängig voneinander gesteuert werden sollen.

Eine bevorzugte Ausführungsform der Transporteinrichtung sieht vor, dass sämtliche Objekt-Trägerelemente auf dem Objektträger frei bewegbar sind, wobei jedem Objekt-Trägerelement ein Mitnehmerelement und ein Halteelement zugeordnet sind. Dadurch lassen sich sämtliche Objekt-Trägerelemente unabhängig voneinander steuern.

Eine besonders bevorzugte Ausführungsform sieht eine kreisförmige Führungsbahn vor, in der die Objekt-Trägerelemente in Bezug auf den Objektträger frei bewegbar geführt sind, so dass sie in Bezug auf ein ortsfestes räumliches Koordinatensystem festgehalten werden können. Die Führungsbahn kann unterschiedlich ausgebildet sein. Allein entscheidend ist, dass die Objekt-Trägerelemente sich nur auf der Bewegungsbahn bewegen können.

Zur Aufnahme der Objekte können die Objekt-Trägerelemente Aufnahmeelemente aufweisen, in die oder auf die sich die Objekte ein- bzw. auflegen lassen. Dadurch sind die Objekte an den Objekt-Trägerelementen ausreichend fixiert.

Die Mitnehmerelemente und Halteelemente können unterschiedlich ausgebildet sein. Allein entscheidend ist, dass eine ausreichende Fixierung der Objekt-Trägerelemente erfolgen kann. Die Fixierung kann durch eine formschlüssige und/oder kraftschlüssige Verbindung erfolgen. Die Mitnehmerelemente sind vorzugsweise derart ausgebildet, dass sie eine form- bzw. kraftschlüssige Verbindung zwischen einem Teil des Objekt-Trägerelements und einem Teil des Objektträgers herstellen, während die Halteelemente derart ausgebildet sind, dass eine form- bzw. kraftschlüssige Verbindung zwischen einem Teil des Objekt-Trägerelements und einem ortsfesten Teil hergestellt wird.

Durch die Steuerung der Antriebseinheit des Objektträgers und der Betätigung der Mitnehmer- bzw. Halteelemente werden die Objekt-Trägerelemente mit den Objekten in der gewünschten Bearbeitungsposition gegenüber der jeweiligen Arbeitsstation positioniert und können von einer Arbeitsstation zu einer anderen Arbeitsstation weiterbewegt werden.

Die erfindungsgemäße Transporteinrichtung kann in unterschiedlichen Produktionsanlagen Verwendung finden. Bei einer besonders bevorzugten Ausführungsform findet die erfindungsgemäße Transporteinrichtung in einer Produktionsanlage zur Herstellung von mit einem medizinischen Produkt, insbesondere einem Arzneimittel, befüllten Behältnissen Verwendung, insbesondere zur Herstellung von medizinischen Lösungsbeuteln, beispielsweise Lösungsbeutel für die Peritonealdialyse oder die Akut-Hämodialyse oder die Infusionstechnik.

Das erfindungsgemäße Verfahren zum Transport von Objekten von Arbeitsstation zu Arbeitsstation einer Produktionsanlage weist die folgenden Arbeitsschritte auf:

Anordnen einer Mehrzahl von Objekt-Trägerelementen zur Ablage von einem oder mehreren Objekten auf einem drehbaren Objektträger,

Drehen des Objektträgers in aufeinanderfolgenden Arbeitstakten derart, dass die Objekt-Trägerelemente auf einer kreisförmigen Bewegungsbahn von Arbeitsstation zu Arbeitsstation transportiert werden,

wobei

mindestens ein Objekt-Trägerelement der Mehrzahl von Objekt-Trägerelementen auf dem Objektträger in Richtung der kreisförmigen Bewegungsbahn relativ zum Objektträger verschiebbar angeordnet wird,

in einzelnen Arbeitstakten der aufeinanderfolgenden Arbeitstakte eine Relativbewegung von dem mindestens einen Objekt-Trägerelement und dem Objektträger verhindert wird, so dass das mindestens eine Objekt-Trägerelement von dem Objektträger mitgenommen und von Arbeitsstation zu Arbeitsstation bewegt wird, und

in einzelnen Arbeitstakten der aufeinanderfolgenden Arbeitstakte eine Relativbewegung von dem mindestens einen Objekt-Trägerelement und dem Objektträger zugelassen wird und das mindestens eine Objekt-Trägerelement festgehalten wird, so dass das mindestens eine Trägerelement an einer Arbeitsstation verbleibt.

Das erfindungsgemäße Verfahren zeichnet sich dadurch aus, dass Aktor-Einheiten, die an den Objekt-Trägerelementen angeordnet sind und zusammen mit den ObjektTrägerelementen bewegbar sind, betätigt werden, wobei eine oder mehrere Aktor-Einheiten mit einem oder mehreren Medien versorgt werden.

Die Zuführung des Mediums oder der Medien zu den Aktor-Einheiten an den ObjektTrägerelementen erfolgt vorzugsweise über eine Drehdurchführung.

Die Aktor-Einheit ist bei einer Ausführungsform der Erfindung als eine Klemmeinrichtung ausgebildet, die Klemmbacken zum Abklemmen eines Teils eines Behältnisses, insbesondere eines Beutels zur Aufnahme einer medizinischen Flüssigkeit, aufweist. Die Klemmeinrichtung kann eine pneumatische Antriebseinrichtung zur Betätigung der Klemmbacken aufweisen. Es kann aber auch eine hydraulische oder elektromotorische Antriebseinrichtung vorgesehen sein.

Die erfindungsgemäße Produktionsanlage zur Herstellung von Produkten umfasst die erfindungsgemäße Transporteinrichtung zum Transport von Objekten sowie eine Mehrzahl von Arbeitsstationen, wobei jede Arbeitsstation zur Durchführung eines mindestens einen Arbeitsschritt umfassenden Arbeitsprozesses an mindestens einem Produkt, das auf einem Objekt-Trägerelement angeordnet ist, ausgebildet ist. Die Aktor-Einheiten der Transporteinrichtung können einzelne Arbeitsstationen ganz oder teilweise ersetzen.

Im Folgenden wird ein Ausführungsbeispiel der Erfindung unter Bezugnahme auf die Zeichnungen näher erläutert.

Es zeigen:

Fig. 1     eine Draufsicht auf ein Ausführungsbeispiel einer Transporteinrichtung in stark vereinfachter schematischer Darstellung, die nicht über den Objekt-Trägerelementen zugeordneten und von einer zentralen Versorgungseinrichtung mit Medien versorgten Aktor-Einheiten verfügt.

Fig. 2     die Transporteinrichtung von Fig. 2 in schematischer Schnittdarstellung,

Fig. 3     den ersten Arbeitsschritt eines Verfahrens zur Herstellung von Produkten mit der Transporteinrichtung in schematischer Draufsicht,

Fig. 4     den zweiten Arbeitsschritt des Herstellungsverfahrens in schematischer Draufsicht,

Fig. 5     den dritten Arbeitsschritt des Verfahrens in schematischer Draufsicht,

Fig. 6     den vierten Arbeitsschritt des Verfahrens in schematischer Draufsicht,

Fig. 7     den fünften Arbeitsschritt des Verfahrens in schematischer Draufsicht,

Fig. 8     einen kleinen Arbeitstakt des sechsten Arbeitsschrittes des Verfahrens in schematischer Draufsicht,

Fig. 9     einen großen Arbeitstakt des sechsten Arbeitsschrittes des Verfahrens in schematischer Draufsicht,

Fig. 10    die erfindungsgemäße Transporteinrichtung, die über den Objekt-Trägerelementen zugeordneten und von einer zentralen Versorgungseinrichtung mit Medien versorgten Aktor-Einheiten verfügt, in stark vereinfachter schematischer Darstellung,

Fig. 11    eine vergrößerte Teilansicht der Drehdurchführung der erfindungsgemäßen Transporteinrichtung in geschnittener Darstellung,

Fig. 12    eine vergrößerte Teilansicht einer weiteren Ausführungsform der Drehdurchführung in geschnittener Darstellung, und

Fig. 13    ein Ausführungsbeispiel einer Aktor-Einheit der erfindungsgemäßen Transporteinrichtung in schematischer Darstellung.

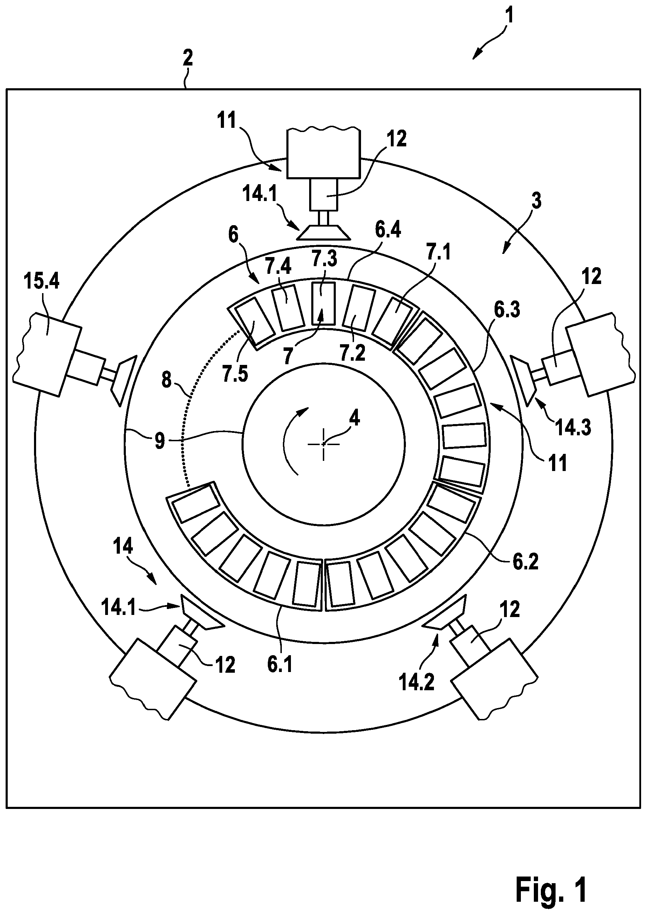

Nachfolgend wird unter Bezugnahme auf die Figuren 1 bis 10 eine Transporteinrichtung beschrieben, die nicht über zusätzliche Aktor-Einheiten verfügt, die den ObjektTrägerelementen zugeordnet sind und von einer zentralen Versorgungseinrichtung mit Medien versorgt werden. Diese Transporteinrichtung ist Gegenstand der nicht veröffentlichten deutschen Patentanmeldung DE 10 2016 004 335.0.

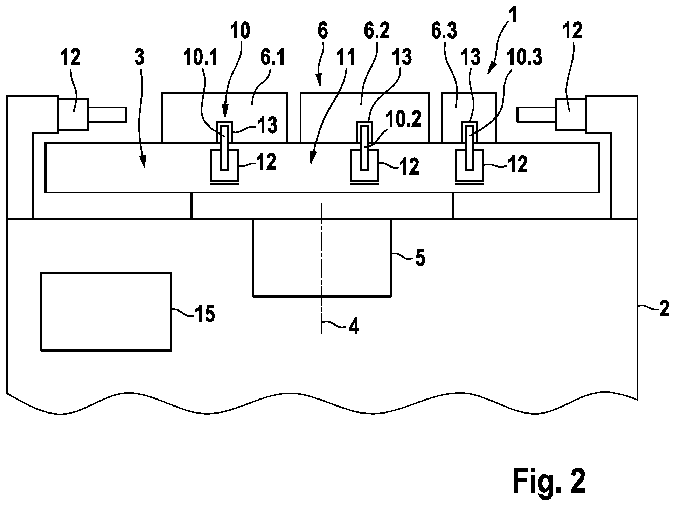

Die Figuren 1 und 2 zeigen in stark vereinfachter schematischer Darstellung ein Ausführungsbeispiel der Transporteinrichtung in der Draufsicht (Fig. 1) und der Seitenansicht (Fig. 2). In den Figuren sind nur die für die Erfindung wesentlichen Komponenten der Transporteinrichtung dargestellt. Die Figuren dienen nur der Veranschaulichung. Die Größenverhältnisse zwischen den einzelnen Komponenten müssen nicht den tatsächlichen Verhältnissen entsprechen.

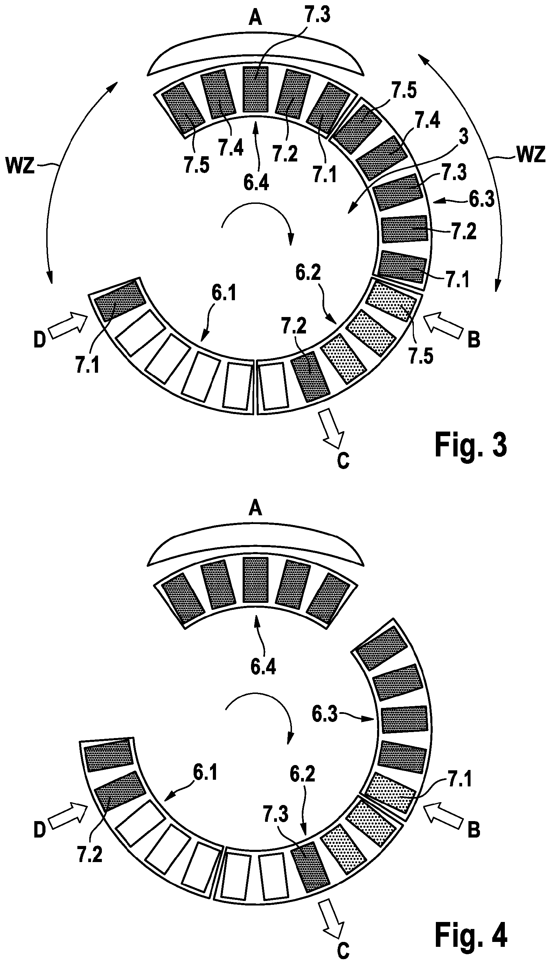

Die Transporteinrichtung ist als Rundschalttisch ausgebildet. Der Rundschalttisch 1 weist ein Gehäuse 2 auf, das einen Objektträger 3 aufnimmt, der um eine vertikale Mittelachse 4 von einer Antriebseinheit 5 drehbar ist. In den Figuren 3 bis 9 steht die vertikale Mittelachse 4 senkrecht auf der Bildebene. Die Antriebseinheit 5 dreht den Objektträger 3 in aufeinanderfolgenden Arbeitstakten schrittweise um einen fest vorgegebenen Drehwinkel.

Der Objektträger 3 nimmt eine Mehrzahl von Objekt-Trägerelementen auf. Bei dem vorliegenden Ausführungsbeispiel nimmt der Objektträger 3 die Objekt-Trägerelemente 6.1, 6.2, 6.3, 6.4 auf. Die Objekt-Trägerelemente 6 weisen jeweils eine Mehrzahl von Aufnahmeelementen 7 auf. Bei dem vorliegenden Ausführungsbeispiel weisen die Objekt-Trägerelemente 6 jeweils fünf Aufnahmeelemente 7.1, 7.2, 7.3, 7.4, 7.5 auf. Jedes Aufnahmeelement kann ein Objekt aufnehmen. Es ist aber auch möglich, dass jedes Objekt-Trägerelement 6 nur ein Aufnahmeelement aufweist, wobei es auch möglich ist, dass ein Aufnahmeelement 7 auch mehrere Objekte aufnimmt. Die Aufnahmeelemente können beispielsweise Schalen, Ständer, Halterungen oder dergleichen sein.

Die Objekt-Trägerelemente 6 sind auf dem Objektträger 3 umfangsmäßig verteilt angeordnet. Sie beschreiben jeweils die Form eines Kreissegments. Wenn sich der Objektträger dreht, beispielsweise im Uhrzeigersinn, wie durch einen Pfeil dargestellt ist, können sich die Trägerelemente 6 auf einer kreisförmigen Bewegungsbahn 8 bewegen. Die Objekt-Trägerelemente 6 sind aber nicht fest mit dem Objektträger 3 verbunden, sondern in einer nur schematisch dargestellten Führung 9 in Richtung der Kreisbahn 8 verschiebbar geführt. Wenn die Objekt-Trägerelemente 6 also von außen festgehalten werden, kann sich der Objektträger 3 drehen, ohne dass die Objekt-Trägerelemente mitgenommen werden.

Bei dem vorliegenden Ausführungsbeispiel haben die einzelnen Trägerelemente 6 einen Umfangswinkel von jeweils 360°/5 = 72°. Da nur vier Objekt-Trägerelemente 6.1, 6.2, 6.3, 6.4 vorgesehen sind, bleibt ein Abschnitt der kreisförmigen Bewegungsbahn 8 frei. Dieser Freiraum erlaubt ein Verschieben der Objekt-Trägerelemente 6 relativ zum Objektträger 3, ohne dass die Objekt-Trägerelemente sich gegenseitig blockieren. Die Anzahl der Objekt-Trägerelemente 6 und der Umfangswinkel der Objekt-Trägerelemente 6 sind von der Anordnung und Anzahl der Arbeitsstationen abhängig.

Bei dem vorliegenden Ausführungsbeispiel, das nachfolgend im Einzelnen unter Bezugnahme auf die Figuren 3 bis 9 beschrieben wird, ist die Transporteinrichtung Teil einer Produktionsanlage, die über vier Arbeitsstationen verfügt. In den Figuren 1 und 2 sind die Arbeitsstationen nicht dargestellt. Sie sind um den Objektträger 3 des Rundschalttisches 1 umfangsmäßig verteilt angeordnet.

Die Transporteinrichtung verfügt weiterhin über eine Mehrzahl von Mitnehmerelementen. Bei dem vorliegenden Ausführungsbeispiel sind sämtliche Objekt-Trägerelemente 6 verschiebbar geführt. Daher ist jedem Objekt-Trägerelement 6.1, 6.2, 6.3, 6.4 ein Mitnehmerelement 10 zugeordnet. In Fig. 2 sind nur drei Mitnehmerelemente 10.1, 10.2, 10.3 gezeigt. Sämtliche Mitnehmerelemente werden von einer Betätigungseinheit betätigt, die den einzelnen Mitnehmerelementen zugeordnete Betätigungsorgane 12 aufweist. In den Figuren 1 und 2 ist die Betätigungseinheit als eine Einrichtung, die die Betätigungsorgane 12 aufweist, mit dem Bezugszeichen 11 bezeichnet. Die Betätigungsorgane 12 können beispielsweise elektrische, magnetische, elektromagnetische, pneumatische oder hydraulische Antriebe umfassen.

Die Mitnehmerelemente 10 sind bei dem vorliegenden Ausführungsbeispiel Stifte, die in Ausnehmungen 13 der Objekt-Trägerelemente 6 greifen. Die Mitnehmerelemente 10 können von den Betätigungsorganen 12 der Betätigungseinheit 11 derart betätigt werden, dass sie einen Zustand einnehmen, in dem sie in eine Ausnehmung 13 eines Objekt-Trägerelements 6 greifen oder aus der Ausnehmung zurückgezogen sind. Dadurch können die Objekt-Trägerelemente 6 an dem Objektträger 3 festgestellt werden. Die Betätigungsorgane 12 können von der Betätigungseinheit 11 unabhängig voneinander betätigt werden. Die Objekt-Trägerelemente 6 sind unabhängig voneinander arretierbar.

Darüber hinaus weist die Transporteinrichtung eine Mehrzahl von Halteelementen 14 auf. Bei dem vorliegenden Ausführungsbeispiel ist jedem Objekt-Trägerelement 6 ein Halteelement 14.1, 14.2, 14.3, 14.4, (14.5) zugeordnet. Die Haltelemente 14 werden von den Betätigungsorganen 12 der Betätigungseinheit 11 betätigt. Die Betätigungsorgane 12 für die Haltelemente können beispielsweise elektrische, magnetische, elektromagnetische, pneumatische oder hydraulische Antriebe umfassen. Die Halteelemente 14 sind umfangsmäßig verteilt, um den Objektträger 3 angeordnet. Sie bewegen sich nicht wie die Mitnahmeelemente 10 zusammen mit dem Objektträger 3, sondern sind fest mit dem Gehäuse 2 der Transporteinrichtung verbunden. Die Halteelemente 14 können beispielsweise in Längsrichtung verschiebbare Druckstempel sein, die auf die äußeren Umfangsflächen der Objekt-Trägerelemente 6 gedrückt werden, so dass die Objekt-Trägerelemente von außen festgehalten werden.

Des Weiteren verfügt die Transporteinrichtung über eine Steuereinheit 15 für die Betätigungseinheit 11. Die Steuereinheit 15 kann eine frei programmierbare Steuereinheit sein, mit der die einzelnen Betätigungsorgane 12 der Betätigungseinheit 11 unabhängig voneinander zu bestimmten Zeitpunkten angesteuert werden können, so dass die Mitnehmer- und Halteelemente 10, 14 betätigt werden.

Die Steuereinheit 15 ist derart ausgebildet, dass in einzelnen Arbeitstakten das einem Objekt-Trägerelement 6 zugeordnete Mitnehmerelement 10 einen aktiven Zustand und das dem Objekt-Trägerelement zugeordnete Halteelement 14 einen nicht aktiven Zustand einnimmt, so dass das Objekt-Trägerelement 6 von dem Objektträger 3 mitgenommen und von Arbeitsstation zu Arbeitsstation bewegt wird. Die Steuereinheit 15 ist ferner derart ausgebildet, dass in einzelnen Arbeitstakten das dem Objekt-Trägerelement 6 zugeordnete Mitnehmerelement 10 einen inaktiven Zustand und das Halteelement 14 einen aktiven Zustand einnimmt, so dass das Objekt-Trägerelement an einer Arbeitsstation verbleibt.

Die Figuren 3 bis 9 zeigen die einzelnen Arbeitsschritte eines Verfahrens zur Herstellung eines Produktes. Bei dem vorliegenden Ausführungsbeispiel ist das Herstellungsverfahren ein Verfahren zur Herstellung von mit einem medizinischen Produkte befüllten Behältnissen, insbesondere von mit einer medizinischen Lösung befüllten Beuteln, insbesondere Folienbeutel für die Peritonealdialyse. Die Figuren 3 bis 9 dienen nur zur Veranschaulichung des Grundprinzips des Verfahrens. Daher sind nicht sämtliche Verfahrensschritte dargestellt, die zur Herstellung der Produkte erforderlich sind.

Die Produktionsanlage umfasst mindestens eine der unter Bezugnahme auf die Figuren 1 und 2 beschriebenen Transporteinrichtung. Fig. 3 zeigt in schematischer Darstellung nur die vier Objekt-Trägerelemente 6.1, 6.2, 6.3, 6.4 der Transporteinrichtung (Drehschalttisch). Die Produktionsanlage weist bei dem vorliegenden Ausführungsbeispiel vier nur andeutungsweise dargestellte Arbeitsstationen A, B, C, D auf, die umfangsmäßig verteilt um den Objektträger 3 angeordnet sind. Die Behältnisse, insbesondere Folienbeutel, werden als Rohlinge bereitgestellt, die nicht mit einem Anschlussstück, insbesondere mit einem Einschweissschiffchen, versehen und nicht mit dem medizinischen Produkt, insbesondere einer Flüssigkeit, beispielsweise einer Lösung für die Peritonealdialyse, befüllt sind. Die Arbeitsstation A ist eine Füllstation, mit der die mit dem Anschlussstück versehenen Beutel befüllt werden. Das Befüllen der Beutel ist ein Arbeitsprozess mit einer langen Prozesszeit. Die Prozesszeit ist deutlich länger als die Prozesszeit der anderen Arbeitsstationen. Die Arbeitsstation B mit einer kurzen Prozesszeit ist eine Arbeitsstation, mit der die Beutelrohlinge mit den Anschlussstücken bestückt werden. Die Arbeitsstation C ist eine Arbeitsstation zur Entnahme der mit dem Anschlussstück versehenen und befüllten Beutel, und die Arbeitsstation D ist eine Arbeitsstation zum Auflegen der Beutelrohlinge. Die Arbeitsstationen B, C, D haben eine Prozesszeit, die kürzer als die Prozesszeit der Arbeitsstation A ist.

Die Antriebseinheit 5 dreht den Objektträger 3 schrittweise in aufeinanderfolgenden kurzen oder langen Arbeitstakten im Uhrzeigersinn. Bei dem vorliegenden Ausführungsbeispiel wird der Objektträger 3 in einem kurzen Arbeitstakt um 14,4° im Uhrzeigersinn gedreht (360° / 5 (5 Trägerelemente) / 5 (5 Aufnahmeelemente 7.1, 7.2, 7.3, 7.4, 7.5 pro Trägerelement = 14,4°). Die Mitnehmerelemente 10 und Halteelemente 14 (Fig. 1 und Fig. 2) sind in den Figuren 3 bis 9 nicht dargestellt.

Das beschriebene Verfahren zeichnet sich durch eine Kombination aus Einzeltakten für die Arbeitsstationen B, C, D mit kurzer Prozesszeit und Vielfachtakten für die Arbeitsstation A mit langer Prozesszeit aus. Dafür ist das Auffangen der Einzeltakte vor der Arbeitsstation A mit langer Prozesszeit und das Auffangen des Vielfachtaktes nach der Arbeitsstation A mit langer Prozesszeit erforderlich. Das Auffangen der Einzeltakte und des Vielfachtaktes erfolgt in Wartezonen WZ in Drehrichtung (im Uhrzeigersinn) vor und hinter der Arbeitsstation A mit langer Prozesszeit. Nachfolgend werden die einzelnen Arbeitsschritte beschrieben.

Fig. 3 zeigt den ersten Arbeitsschritt (Ausgangsposition). Die vier Objekt-Trägerelemente 6.1, 6.2, 6.3, 6.4 sind derart angeordnet, dass sich in der Wartezone WZ vor der Arbeitsstation A mit langer Prozesszeit im ersten Arbeitsschritt kein Objekt-Trägerelement befindet. Die Beutelrohlinge befinden sich in den Aufnahmeelementen 7.1, 7.2, 7.3, 7.4, 7.5 des dritten und vierten Objekt-Trägerelements 6.3, 6.4. Die Wartezone WZ vor der Arbeitsstation A mit langer Prozesszeit ist leer und die Wartezone WZ hinter der Arbeitsstation A ist voll. Die Arbeitsstation A für den Füllprozess mit der langen Prozesszeit und die Arbeitsstationen B, C, D für die Arbeitsprozesse mit den kurzen Arbeitszeiten sind im Betrieb. Die Arbeitsstation B bestückt den in dem fünften Aufnahmeelement 7.5 des zweiten Objekt-Trägerelements 6.2 befindlichen befüllten Beutel mit einem Anschlussstück, beispielsweise mit einer Abdeckkappe. Die Arbeitsstation C entnimmt den in dem zweiten Aufnahmeelement 7.2 des zweiten Objekt-Trägerelements 6.2 befindlichen mit dem Anschlussstück versehenen und mit der Lösung befüllten, fertigen Beutel und die Arbeitsstation D bestückt das erste Aufnahmeelement 7.1 des ersten Objekt-Trägerelements 6.1 mit einem Beutelrohling.

Fig. 4 zeigt den zweiten Arbeitsschritt. Die Steuereinheit 15 steuert die Betätigungseinheit 11 derart an, dass die dem ersten, zweiten und dritten Objekt-Trägerelement 6.1, 6.2, 6.3 zugeordneten Mitnehmerelemente 10 aktiv und die diesen Objekt-Trägerelementen zugeordneten Halteelemente 14 inaktiv sind, während das dem vierten Objekt-Trägerelement 6.4 zugeordnete Mitnehmerelement 10 inaktiv und das diesem Objekt-Trägerelement zugeordnete Halteelement 14 aktiv ist. Folglich werden das erste, zweite und dritte Objekt-Trägerelement 6.1, 6.2, 6.3 bei einer Drehung des Objektträgers 3 im Uhrzeigersinn mitgenommen und das vierte Objekt-Trägerelement 6.4 festgehalten. Nachdem sich der Objektträger 3 um einen vorgegebenen Drehwinkel (14,4°) gedreht hat, ist die Wartezone WZ vor dem langen Prozess mit einem Beutelrohling einfach bestückt und die Wartezone WZ nach dem langen Prozess vierfach mit befüllten Beuteln belegt. Die Arbeitsstation B bestückt den in dem ersten Aufnahmeelement 7. 1 des dritten Objekt-Trägerelements 6.3 befindlichen befüllten Beutel mit einem Anschlussstück. Die Arbeitsstation C entnimmt den in dem dritten Aufnahmeelement 7.3 des zweiten Objekt-Trägerelements 6.2 befindlichen mit dem Anschlussstück versehenen und mit der Lösung befüllten, fertigen Beutel und die Arbeitsstation D bestückt das zweite Aufnahmeelement 7.2 des ersten Objekt-Trägerelements 6.1 mit einem Beutelrohling.

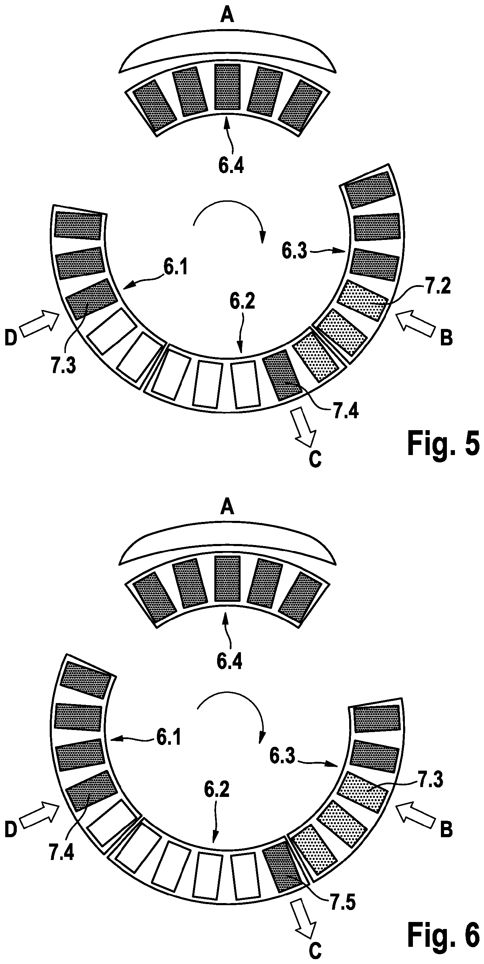

Im dritten Arbeitsschritt (Fig. 5) steuert die Steuereinheit 15 die Betätigungseinheit 11 wieder derart an, dass das erste, zweite und dritte Objekt-Trägerelement 6.1, 6.2, 6.3 mitgenommen und das vierte Objekt-Trägerelement 6.4 festgehalten wird. Der Objektträger 3 dreht sich wieder um einen vorgegebenen Drehwinkel (14,4°). Nach der Drehung des Objektträgers 3 ist die Wartezone WZ vor dem langen Prozess zweifach mit Beutelrohlingen bestückt und die Wartezone nach dem langen Prozess dreifach mit befüllten Beuteln belegt. Die Arbeitsstation B bestückt jetzt den im zweiten Aufnahmeelement 7.2 des dritten Objekt-Trägerelements 6.3 befindlichen befüllten Beutel mit einem Anschlussstück. Die Arbeitsstation C entnimmt den fertigen Beutel aus dem vierten Aufnahmeelement 7.4 des zweiten Objekt-Trägerelements 6.2 und die Arbeitsstation D bestückt das dritte Aufnahmeelement 7.3 des ersten Objekt-Trägerelements 6.1 mit einem Beutelrohling.

Im vierten Arbeitsschritt (Fig. 6) werden wieder das erste, zweite und dritte Objekt-Trägerelement 6.1, 6.2, 6.3 mitgenommen, während das vierte Objekt-Trägerelement 6.4 festgehalten wird. Nach der Drehung des Objekt-Trägerelements um den vorgegebenen Drehwinkel (14,4°) ist die Wartezone WZ vor dem langen Prozess dreifach mit Beutelrohlingen und die Wartezone WZ nach dem langen Prozess zweifach mit befüllten Beuteln belegt. Die Arbeitsstation B bestückt den in dem dritten Aufnahmeelement 7.3 des dritten Objekt-Trägerelements 6.3 befindlichen befüllten Beutel mit einem Anschlussstück. Die Arbeitsstation C entnimmt den fertigen Beutel aus dem fünften Aufnahmeelement 7.5 des zweiten Objekt-Trägerelements 6.2 und die Arbeitsstation D beschickt das vierte Aufnahmeelement 7.4 des ersten Objekt-Trägerelements 6.1 mit einem Beutelrohling.

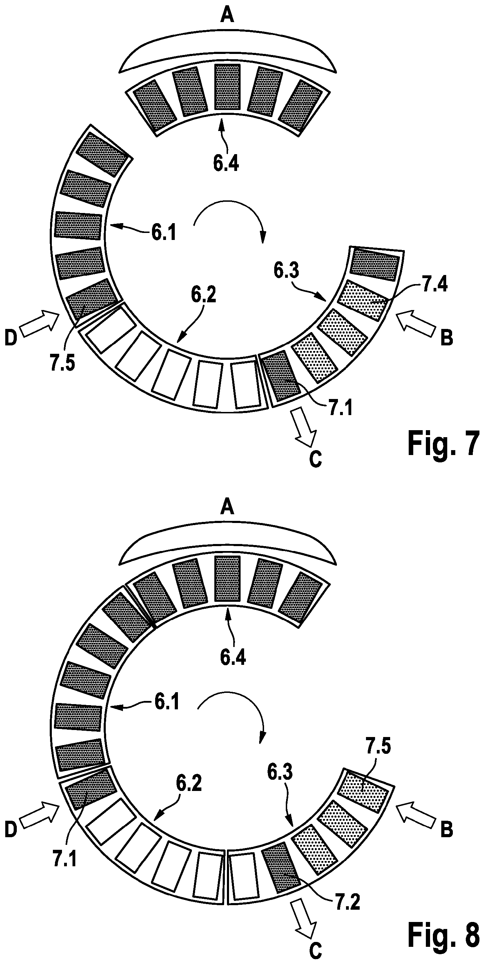

Im fünften Arbeitsschritt (Fig. 7) werden das erste, zweite und dritte Objekt-Trägerelement 6.1, 6.2, 6.3 mitgenommen, während das vierte Objekt-Trägerelement 6.4 festgehalten wird. Nach einer Drehung des Objektträgers 3 um den vorgegebenen Drehwinkel (14,4°) ist die Wartezone WZ vor dem langen Prozess vierfach mit Beutelrohlingen bestückt und die Wartezone WZ nach dem langen Prozess einfach mit befüllten Beuteln belegt. Der in dem vierten Aufnahmeelement 7.4 des dritten Objekt-Trägerelements 6.3 befindliche befüllte Beutel wird mit dem Anschlussstück bestückt, der in dem ersten Aufnahmeelement 7.1 des dritten Objekt-Trägerelements 6.3 befindliche fertige Beutel wird entnommen und das fünfte Aufnahmeelement 7.5 des ersten Objekt-Trägerelements 6.1 wird mit einem Beutelrohling beschickt.

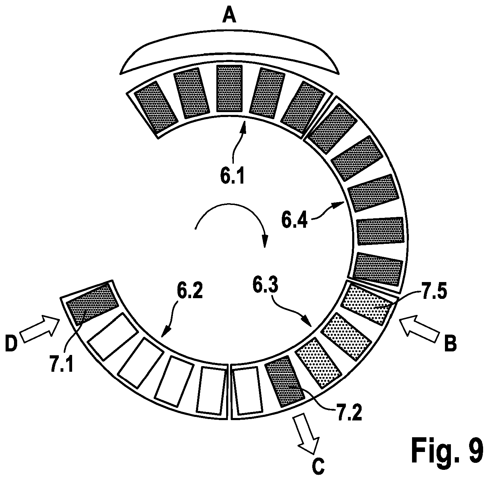

Nunmehr schließt sich der sechste Arbeitsschritt an, der einen kleinen Takt (Fig. 8) mit einer Drehung des Objektträgers um einen Drehwinkel von 14,4° und einen großen Takt (Fig. 9) mit einer Drehung des Objektträgers 3 um einen Drehwinkel von 72° (5* 14,4°=72°) umfasst. In dem kleinen Takt werden das erste, zweite und dritte Objekt-Trägerelement 6.1, 6.2, 6.3 mitgenommen und das vierte Objekt-Trägerelement 6.4 festgehalten. Nach der Drehung des Objektträgers um 14,4° (kleiner Takt) ist die Wartezone WZ vor dem langen Prozess voll und die Wartezone WZ nach dem langen Prozess leer. Der in dem fünften Aufnahmeelement 7.5 des dritten Objekt-Trägerelements 6.3 befindliche befüllte Beutel wird mit einem Anschlussstück bestückt, der fertige Beutel wird aus dem zweiten Aufnahmeelement 7.2 des dritten Objekt-Trägerelements 6.1 entnommen und das erste Aufnahmeelement 7.1 des zweiten Objekt-Trägerelements 6.2 wird mit einem Beutelrohling beschickt.

In dem sich an den kleinen Takt anschließenden großen Takt (Fig. 9) des sechsten Arbeitsschrittes steuert die Steuereinheit 15 die Betätigungseinheit 11 derart an, dass das erste und vierte Objekt-Trägerelement 6.1, 6.4 mitgenommen und das zweite und dritte Objekt-Trägerelement 6.2, 6.3 festgehalten wird. Der Objektträger 3 dreht sich im großen Takt um 72° (5* 14,4°=72°). Nach der Drehung des Objektträgers 3 ist die Wartezone WZ vor dem langen Prozess leer und die Wartezone WZ nach dem langen Prozess voll, so dass sich wieder der erste Arbeitsschritt (Fig. 3) anschließen kann.

Im sechsten Arbeitsschritt ist die Summe aus der Taktzeit kurzer Takt $t_{TK}$ und der Taktzeit langer Takt $t_{TL}$ kleiner als die Gesamtprozesszeit kurzer Takt $t_{GK}$ ($t_{TK}+t_{TL}<t_{GK}$).

Der oben beschriebene Prozess entspricht einer 5-fach Parallelschaltung des längsten Prozesses.

Bei der Auslegung der Produktionsanlage ergeben sich die folgenden Gesetzmäßigkeiten:

| | |
|---|---|
| $t_{PK}$ | Prozesszeit kurzer Prozess |
| $t_{PL}$ | Prozesszeit langer Prozess |
| $t_{TK}$ | Taktzeit kurzer Takt |
| $t_{TL}$ | Taktzeit langer Takt |
| $t_{GK}$ | Gesamtprozesszeit kurzer Takt |
| $t_{GL}$ | Gesamtprozesszeit langer Takt |
| S | Skalierfaktor |
| WZ | Wartezone |
| $A_{OTE}$ | Anzahl Objekt-Trägerelemente |
| $A_{WZ}$ | Anzahl Wartezonen |
| LP | Prozess mit langer Prozesszeit |
| KP | Prozess mit kurzer Prozesszeit |

Gesamtprozesszeit kurzer Takt:

$$t_{GK}=t_{PK}+t_{TK}$$

Kurzer und langer Takt müssen zwingend innerhalb der Taktzeit des kurzen Taktes liegen:

$$t_{TK}+t_{TL}<t_{GK}$$

Gesamtprozesszeit langer Takt:

$$t_{GL}=t_{PL}+t_{TLK}$$

Berechnung der notwendigen Vervielfachung des längsten Prozessschrittes:

$$t_{GL}/t_{GK}=S$$

Je nach Festlegung, welcher Anlagenteil Engpass der gesamten Anlage sein soll, muss S auf- oder abgerundet werden.

Anzahl gekoppelter Objektträger pro Segment: S*Objektträger=Objekt-Trägerelement

Anzahl Objekt-Trägerelemente pro System: $A_{OTE}\geq2$ (1 x kurzer Prozess, 1 x langer Prozess)

Anzahl WZ pro System: $A_{WZ}\geq2$ (pro Wechsel von kurzem Prozess zu langem Prozess WZ notwendig, pro Wechsel von langem Prozess zu kurzem Prozess WZ notwendig)

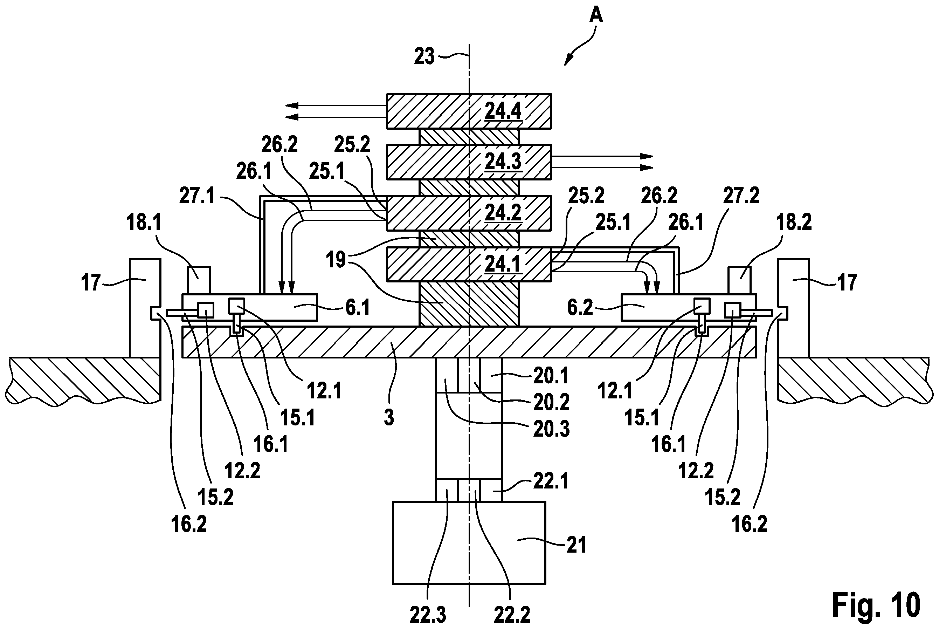

Nachfolgend wird die erfindungsgemäße Transporteinrichtung unter Bezugnahme auf die Figuren 10 bis 13 beschrieben. Die einander entsprechenden Teile sind mit denselben Bezugszeichen versehen. Das beschriebene Ausführungsbeispiel der erfindungsgemäßen Transporteinrichtung unterscheidet sich von der Transporteinrichtung gemäß der Figuren 1 bis 10 dadurch, dass zusätzliche Aktor-Einheiten vorgesehen sind, die den Objekt-Trägerelementen zugeordnet sind und von einer zentralen Versorgungseinrichtung mit Medien versorgt werden. Die Versorgung der Aktor-Einheiten mit Medien erfolgt über eine Drehdurchführung, die bei der Transporteinrichtung gemäß der Figuren 1 bis 9 nicht vorgesehen ist. Die Drehdurchführung ist in Fig. 10 mit dem Bezugszeichen A bezeichnet.

Darüber hinaus unterscheidet sich das beschriebene Ausführungsbeispiel der erfindungsgemäßen Transporteinrichtung von der Transporteinrichtung gemäß der Figuren 1 bis 9 durch die Betätigungseinheit zur Betätigung der Betätigungsorgane für die Halteelemente und die Mitnehmerelemente. Sämtliche Betätigungsorgane der Halteelemente und der Mitnehmerelemente befinden sich an den Objekt-Trägerelementen. Die Halteelemente und Mitnehmerelemente sind bei dem vorliegenden Ausführungsbeispiel Stifte. Die Objekt-Trägerelemente 6 weisen jeweils ein erstes Betätigungsorgan 12.1 auf, das ein stiftförmiges Mitnehmerelement 15.1 betätigt, das in eine Ausnehmung 16.1 des Objektträgers 3 vor- oder zurückgezogen werden kann, so dass das Objekt-Trägerelement 6.1 von dem Objektträger 3 mitgenommen wird oder freigegeben wird. Darüber hinaus weisen die Objekt-Trägerelemente 6 ein zweites Betätigungsorgan 12.2 auf, das ein stiftförmiges Halteelement 15.2 betätigt, das in eine Ausnehmung 16.2 eines ortsfesten Bauteils 17 vor- oder zurückgezogen werden kann, so dass das Objekt-Trägerelement 6.2 an dem ortsfesten Bauteil 17 arretiert oder freigegeben wird. Bei diesem Ausführungsbeispiel sind also Betätigungsorgane, die ortsfesten Bauteilen zugeordnet sind, nicht vorhanden. Derartige Betätigungsorgane werden auch als Aktor-Einheiten im Sinne der Erfindung verstanden.

Einzelnen oder sämtlichen Objekt-Trägerelementen 6 sind weitere Aktor-Einheiten 18.1, 18.2 zugeordnet, die sich zusammen mit den Objekt-Trägerelementen bewegen. Diese Aktor-Einheiten 18.1, 18.2 können der Betätigung von weiteren Einrichtungen dienen, die auf die Objekte einwirken oder der Steuerung des Prozesses dienen. Diese Einrichtungen, die unterschiedliche Funktionen haben können, sind in den Figuren nicht dargestellt. An den Objekt-Trägerelementen 6 können auch Einrichtungen vorgesehen sein, die mit besonderen Betriebsmitteln versorgt werden, die mit der Drehdurchführung zugeführt werden können.

Die Versorgung der Betätigungsorgane 12 (Aktor-Einheiten) oder der Aktor-Einheiten 18.1, 18.2 mit Medien erfolgt mit der erfindungsgemäßen Drehdurchführung A. Wenn die Aktor-Einheiten (Betätigungsorgane) pneumatische Antriebeinrichtungen aufweisen, werden sie mit Druckluft versorgt. Elektrische oder elektromagnetische Antriebeinrichtungen werden mit Strom versorgt.

Die erfindungsgemäße Drehdurchführung weist ein feststehendes Bauteil 19 auf, das den Objektträger 3 im Zentrum durchdringen kann. Das feststehende Bauteil 19 weist mindestens einen Medieneingang 20 auf. Bei dem vorliegenden Ausführungsbeispiel ist eine Mehrzahl von in Fig. 10 nur andeutungsweise dargestellten Medien-Eingängen 20.1, 20.2, 20.3 vorgesehen, mit denen unterschiedliche Medien zugeführt werden können, u. a. Druckluft zur Betätigung der Antriebeinrichtungen der Aktor-Einheiten.

Die Transporteinrichtung weist darüber hinaus eine zentrale Versorgungseinrichtung 21 auf, die über eine oder mehrere Versorgungsleitungen 22.1, 22. 2, 22.3, beispielsweise Schlauchleitungen oder elektrische Leitungen, die an den einen oder die mehreren Medien-Eingänge 20.1, 20.2, 20.3 der Drehdurchführung angeschlossen sind. Die Versorgungsleitungen sind in Fig. 10 nur andeutungsweise dargestellt.

Des Weiteren weist die Drehdurchführung mehrere gegenüber dem feststehenden Bauteil 19 unabhängig voneinander um eine gemeinsame Mittelachse 23 drehbare Bauteile 24.1, 24.2, 24.3, 24.4 auf. Die drehbaren Bauteile 24.1, 24.2, 24.3, 24.4 sind übereinander angeordnet. Bei dem vorliegenden Ausführungsbeispiel ist jedem Objekt-Trägerelement 6.1, 6.2, 6.3, 6.4 ein drehbares Bauteil 24.1, 24.2, 24.3, 24.4 zugeordnet. In Fig. 10 sind nur zwei der vier Objekt-Trägerelemente 6.1, 6.2, 6.3, 6.4 dargestellt. Folglich sind vier drehbare Bauteile vorgesehen. Die drehbaren Bauteile 24.1, 24.2, 24.3, 24.4 weisen jeweils einen oder mehrere Medien-Ausgänge 25.1, 25.2 auf.

Bei dem vorliegenden Ausführungsbeispiel weisen die drehbaren Bauteile mehrere Medienausgänge auf. In Fig. 10 sind nur zwei Medienausgänge 25.1, 25.2 dargestellt, an denen flexible Verbindungsleitungen 26.1, 26.2 angeschlossen sind, die zu dem Betätigungsorgan 12.1 des Mitnehmerelements 10 bzw. zu dem Betätigungsorgan 12.2 des Halteelements 14 führen. Die Verbindungsleitungen 26.1, 26.2 sind in Fig. 10 nur andeutungsweise dargestellt. Weitere nicht dargestellte Medienausgänge sind über weitere nicht dargestellte Verbindungsleitungen mit weiteren Aktor-Einheiten 18.1, 18.2 verbunden, die an einem Objekt-Trägerelement 6.1, 6.2 vorhanden sind.

Die drehbaren Bauteile 24.1, 24.2, 24.3, 24.4 sind mit dem zugehörigen Objekt-Trägerelement 6.1, 6.2 starr verbunden. Hierzu ist jedem drehbaren Bauteil ein Kopplungselement 27.1, 27.2 zugeordnet. In Fig. 10 sind nur die Kopplungselemente der Objekt-Trägerelemente 6.1, 6.2 dargestellt. Das Kopplungselement kann eine Stange oder ein Gestänge sein. Wenn das Objekt-Trägerelement 6.1, 6.2 von dem Objektträger 3 mitgenommen wird, dreht sich das drehbare Bauteil 24.1, 24.2, 24.3, 24.4 mit dem Objekt-Trägerelement gegenüber dem feststehenden Bauteil 19 der Drehdurchführung um die zentrale Mittelachse 23 der Transporteinrichtung.

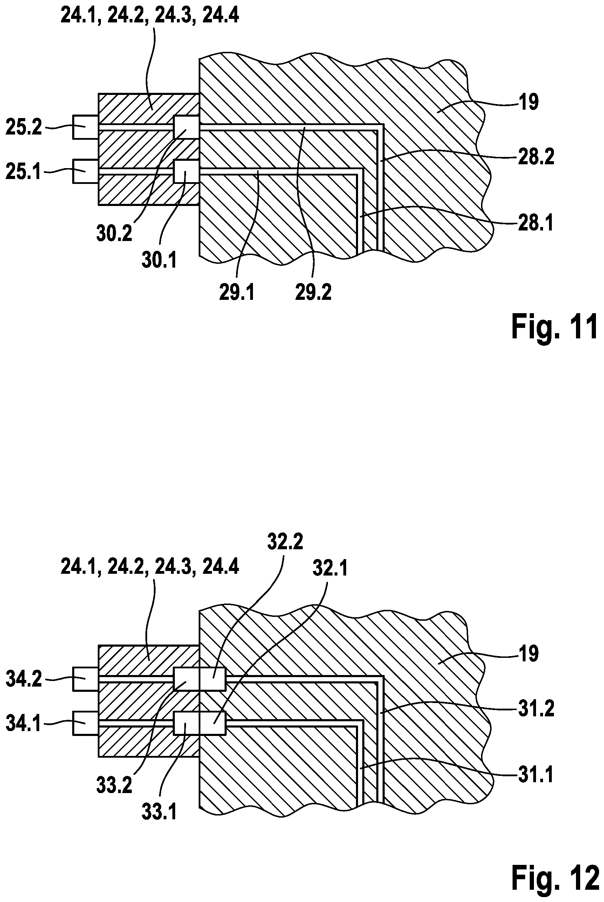

Die Figur 11 zeigt einen Teil der Drehdurchführung in vergrößerter Darstellung. Das feststehende Bauteil 19 ist ein zylindrischer Körper und die drehbaren Bauteile 24.1, 24.2, 24.3, 24.4 sind ringförmige Körper, die das feststehende Bauteil 19 umschließen. In dem feststehenden Bauteil 19 sind axiale Kanäle 29.1, 29.2 ausgebildet, an die sich radiale Bohrungen 29.1, 29.2 anschließen. Die radialen Bohrungen 29.1, 29.2 sind gegenüber Ringspalten 30.1, 30.2 abgedichtet, die in dem drehbaren Bauteil ausgebildet sind. Die Abdichtung erfolgt durch nicht dargestellte Rotations- oder Gleitdichtungen. Bei dem vorliegenden Ausführungsbeispiel weist das drehbare Bauteil 24.1, 24.2, 24.3, 24.4 zwei Medien-Ausgänge 25.1, 25.2 auf, zu denen die beiden axialen Kanäle 30.1, 30.2 führen. Die axialen Kanäle können auch zu Medienausgängen eines oder mehrerer anderer drehbarer Bauteile führen.

Fig. 12 zeigt einen Teil der Drehdurchführung in vergrößerter Darstellung für die Versorgung einer elektrischen oder elektromagnetischen Aktor-Einheit (Betätigungsorgan) mit Strom. In dem feststehenden Bauteil 19 sind elektrische Leitungen 31.1, 31.2 vorgesehen, die zu Gleitkontakten 32.1, 32.2 führen, die ringförmigen Kontakten 33.1, 33.2 gleiten, die in einem oder mehreren drehbaren Bauteil 24.1, 24.2, 24.3, 24.4 vorgesehen sind. Bei dem vorliegenden Ausführungsbeispiel sind an dem drehbaren Bauteil 24.1, 24.2, 24.3, 24.4 zwei elektrische Anschlüsse 34.1, 34.2 vorgesehen, an denen nicht dargestellte elektrische Leitungen angeschlossen werden können.

Die Verwendung der erfindungsgemäßen Drehdurchführung mit weiteren Aktor-Einheiten ist nicht auf das Ausführungsbeispiel der Transporteinrichtung gemäß der Figuren 10 bis 13 beschränkt. Auch die unter Bezugnahme auf die Figuren 1 bis 9 beschriebene Ausführungsform kann über die Drehdurchführung mit weiteren Aktor-Einheiten verfügen.

Bei der Ausführungsform gemäß der Figuren 10 bis 13 kommen die Vorteile der Drehdurchführung besonders zum Tragen, da die Betätigung der Mitnehmerelemente und der Halteelemente eine ortsfeste Maschinentechnik nicht erfordert, was die Drehdurchführung erst möglich macht. Die Betätigungseinheit für die Mitnehmerelemente und der Halteelemente kann an dem Objekt-Trägerelement vorgesehen sein. Beide Betätigungsorgane 12.1, 12.2 für das Mitnehmerelement 10 bzw. Halteelement 14, die Aktor-Einheiten im Sinne der Erfindung darstellen, können getrennt voneinander mit einem Medium, beispielsweise Druckluft, versorgt und somit unabhängig voneinander betätigt werden. Zur Steuerung des Objekt-Trägerelements 6.1, 6.2 kann aber auch eine Zwangskopplung der beiden Betätigungsorgane 12.1, 12.2 derart vorgesehen sein, dass das Betätigungsorgan des Mitnehmerelements betätigt wird, wenn das Betätigungsorgan des Halteelements nicht betätigt wird oder umgekehrt, so dass das zugehörige Objekt-Trägerelement freigegeben oder arretiert wird. Wenn eine derartige Zwangskopplung der Betätigungsorgane vorgesehen ist, sind zwei separate Medienleitungen, beispielsweise Druckluftleitungen, zur Versorgung der Betätigungsorgane nicht erforderlich. Vielmehr ist eine einzige Druckluftversorgung ausreichend. Die Umschaltung kann allein dadurch erfolgen, dass an einem Medienausgang Druckluft anliegt oder nicht.

Eine der Aktor-Einheiten, die über die Drehdurchführung mit einem Medium versorgt wird, kann beispielsweise eine Klemmeinrichtung sein, die Klemmbacken zum Abklemmen eines Teils eines Behältnisses oder einer zugehörigen Schlauchleitung aufweisen. Das Behältnis kann ein Beutel zur Aufnahme einer medizinischen Lösung sein.

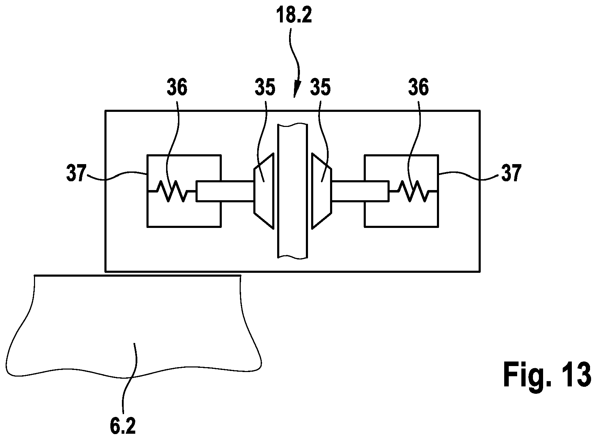

Fig. 13 zeigt ein Ausführungsbeispiel der Klemmeinrichtung in schematischer Darstellung, mit der ein Beutel während des Prozesses verschlossen werden kann. Die Klemmeinrichtung 18.2, die an einem Objektträger-Element 6 angeordnet ist, beispielsweise an dem Objektträger-Element 6.2, weist zwei Klemmbacken 35 auf, die mit Druckfedern 36 in eine Klemmstellung federnd vorgespannt sind. Die Klemmbacken 35 werden mit einer pneumatischen Antriebeinrichtung 37 geöffnet, die mit Druckluft betätigt wird, die von der zentralen Versorgungseinrichtung 21 über die Drehdurchführung A der Antriebseinrichtung zugeführt wird. Wenn Druckluft anliegt, ist die Klemmeinrichtung geöffnet. Die sich zusammen mit dem Objektträger-Element 6.2 drehende Klemmeinrichtung 18.2 erfordert keine ortsfeste Maschinentechnik, die mit geeigneten Aktoren von Außen angreift. Daher können externe Stationen entfallen, wodurch auch die Zugänglichkeit zu der Produktionsanlage verbessert wird. Darüber hinaus kann die Taktzeit verringert werden.

**Patentansprüche**

1. Transporteinrichtung zum Transport von Objekten von Arbeitsstation zu Arbeitsstation einer Produktionsanlage mit

   einem Objektträger (3), auf dem eine Mehrzahl von Objekt-Trägerelementen (6) zur Ablage von einem oder mehreren Objekten angeordnet sind, wobei der Objektträger in aufeinanderfolgenden Arbeitstakten um seine Mittelachse (23) drehbar ist und die Objekt-Trägerelemente (6) auf einer kreisförmigen Bewegungsbahn (8) von Arbeitsstation zu Arbeitsstation transportierbar sind, und
   einer Antriebeinheit (5) zum Antrieb des Objektträgers (3),
   wobei

   mindestens ein Objekt-Trägerelement (6) der Mehrzahl von ObjektTrägerelementen auf dem Objektträger (3) in Richtung der Bewegungsbahn (8), auf der die Objekt-Trägerelemente von Arbeitsstation zu Arbeitsstation (A, B, C, D) transportierbar sind, relativ zum Objektträger verschiebbar angeordnet ist, und
   dem mindestens einen Objekt-Trägerelement (6) ein ortsfestes Halteelement (14) zugeordnet ist, das zwischen einem aktiven Zustand, in dem das Objekt-Trägerelement festgehalten wird, und einem nicht aktiven Zustand, in dem das Objekt-Trägerelement freigegeben wird, bewegbar ist,
   **dadurch gekennzeichnet,**
   **dass** dem mindestens einen Objekt-Trägerelement (6) ein Mitnehmerelement (10) zugeordnet ist, das zwischen einem aktiven Zustand, in dem eine Relativbewegung von Objekt-Trägerelement und Objektträger verhindert wird, und einem nicht aktiven Zustand, in dem eine Relativbewegung von Objekt-Trägerelement und Objektträger zugelassen wird, bewegbar ist,
   **dass** eine Betätigungseinheit (11) zur Betätigung des mindestens einen Mitnehmerelements (10) und des mindestens einen Halteelements (14) und eine Steuereinheit (15) für die Betätigungseinheit vorgesehen ist, wobei die Steuereinheit derart ausgebildet ist, dass in einzelnen Arbeitstakten der aufeinanderfolgenden Arbeitstakte, das Mitnehmerelement (10) einen aktiv Zustand und das Halteelement (14) einen inaktiven Zustand einnimmt, so dass das mindestens eine Objekt-Trägerelement (6) von dem Objektträger (3) mitgenommen und von Arbeitsstation zu Arbeitsstation (A, B, C, D) bewegt wird, und in einzelnen Arbeitstakten der aufeinanderfolgenden Arbeitstakte, das Mitnehmerelement (10) einen inaktiven Zustand und das Halteelement (14) einen aktiven Zustand einnimmt, so dass das mindestens eine Objekt-Trägerelement an einer Arbeitsstation (A, B, C, D) verbleibt, und **dass** auf oder an einem Objekt-Trägerelement (6) oder mehreren ObjektTrägerelementen (6) ein oder mehrere Aktor-Einheiten (18.1, 18.2; 12.1, 12.2) zum Einwirken auf ein Objekt, das einem Objekt-Trägerelement (6) zugeordnet ist, oder zum Aufnehmen von Messwerten oder zur Betätigung von für die Steuerung des Prozesses relevanter Bauteile angeordnet sind, die zusammen mit dem Objekt-Trägerelement (6) oder mit den Objekt-Trägerelementen (6) bewegbar sind.

2. Transporteinrichtung nach Anspruch 1, **dadurch gekennzeichnet, dass** die Transporteinrichtung eine ortsfeste Versorgungseinrichtung (21) für die Versorgung der Aktor-Einheit oder der Aktor-Einheiten (18.1, 18.2; 12.1, 12.2) mit einem oder mehrerer Medien aufweist, wobei eine Medien-Zuführeinrichtung (A) vorgesehen ist, die derart ausgebildet ist, dass ein oder mehrere Medien von der Versorgungseinrichtung (21) der Aktor-Einheit oder der Aktor-Einheiten (18.1, 18.2; 12.1, 12.2) zuführbar sind.

3. Transporteinrichtung nach Anspruch 2, **dadurch gekennzeichnet, dass** die Medien-Zuführeinrichtung als eine Drehdurchführung (A) ausgebildet ist.

4. Transporteinrichtung nach Anspruch 3, **dadurch gekennzeichnet, dass** die Drehdurchführung (A) ein feststehendes Bauteil (19) mit einem oder mehreren Medien-Eingängen (20.1, 20.2, 20.3) zum Zuführen eines oder mehrerer Medien zur Versorgung einer oder mehrerer Aktor-Einheiten (18.1, 18.2; 12.1, 12.2) eines Objekt-Trägerelements (6.1, 6.2) und mehrere gegenüber dem feststehenden Bauteil (19) unabhängig voneinander um eine gemeinsame Mittelachse (23) drehbare Bauteile (24.1, 24.2, 24.3, 24.4) aufweist, die jeweils einen oder mehrere Medien-Ausgänge (25.1, 25.2) aufweisen, wobei das feststehende Bauteil (19) und die drehbaren Bauteile (24.1, 24.2, 24.3, 24.4) derart ausgebildet sind, dass eine Medienverbindung zwischen einem Medien-Eingang des feststehenden Bauteils und einem MedienAusgang des drehbaren Bauteils oder mehreren Medien-Eingängen (20.1, 20.2, 20.3) des feststehenden Bauteils (19) und mehreren Medien-Ausgängen (25.1, 25.2) der drehbaren Bauteile (24.1, 24.2, 24.3, 24.4) hergestellt wird.

5. Transporteinrichtung nach Anspruch 4, **dadurch gekennzeichnet, dass** jedes drehbare Bauteil (24.1, 24.2, 24.3, 24.4) ein Kopplungselement (27.1, 27.2) aufweist, mit dem das drehbare Bauteil an ein Objekt-Trägerelement (6.1, 6.2) gekoppelt ist.

6. Transporteinrichtung nach Anspruch 4 oder 5, **dadurch gekennzeichnet, dass** das feststehende Bauteil (19) als ein zylindrischer Körper ausgebildet ist und die drehbaren Bauteile (24.1, 24.2, 24.3, 24.4) als das feststehende Bauteil umschließende Körper ausgebildet sind, wobei die drehbaren Bauteile (24.1, 24.2, 24.3, 24.4) um die Mittelachse (23) des feststehenden Bauteils (19) drehbar übereinander angeordnet sind.

7. Transporteinrichtung nach einem der Ansprüche 4 bis 6, **dadurch gekennzeichnet, dass** die Drehdurchführung (A) derart angeordnet ist, dass das feststehende Bauteil (19) zentral auf dem Objektträger (3) angeordnet ist oder den Objektträger im Zentrum durchdringt, wobei die drehbaren Bauteile (24.1, 24.2, 24.3, 24.4) auf gleicher Höhe oder tiefer oder höher in Bezug auf die Objekt-Trägerelemente (6) angeordnet sind.

8. Transporteinrichtung nach einem der Ansprüche 4 bis 7, **dadurch gekennzeichnet, dass** die drehbaren Bauteile (24.1, 24.2, 24.3, 24.4) einen oder mehrere MedienAusgänge (25.1, 25.2) aufweisen, wobei der eine oder die mehreren Aktor-Einheiten (18.1, 18.2; 12.1, 12.2) für die Zuführung eines oder mehrerer Medien über Verbindungsleitungen (26.1, 26.2), insbesondere flexible Schlauchleitungen, mit einem oder mehreren Medien-Ausgängen (25.1, 25.2) eines drehbaren Bauteils (24.1, 24.2, 24.3, 24.4) verbunden sind.

9. Transporteinrichtung nach einem der Ansprüche 1 bis 8, **dadurch gekennzeichnet, dass** der Objektträger (3) eine kreisförmige Führungsbahn (9) aufweist, in der die Objekt-Trägerelemente (6) frei bewegbar geführt sind.

10. Transporteinrichtung nach einem der Ansprüche 1 bis 9, **dadurch gekennzeichnet, dass** die Mitnehmerelemente (10) derart ausgebildet sind, dass eine formschlüssige und/oder kraftschlüssige Verbindung zwischen einem Teil des Objekt-Trägerelements (6) und einem Teil des Objektträgers (3) herstellbar ist und/oder die Halteelemente (10) derart ausgebildet sind, dass eine formschlüssige und/oder kraftschlüssige Verbindung zwischen einem Teil des Objekt-Trägerelements (6) und einem ortfesten Teil (2) herstellbar ist.

11. Transporteinrichtung nach einem der Ansprüche 1 bis 10, **dadurch gekennzeichnet, dass** eine Aktor-Einheit als eine Klemmeinrichtung (18.2) ausgebildet ist, die Klemmbacken (35) zum Abklemmen eines Teils eines Behältnisses, insbesondere eines Beutels zur Aufnahme einer medizinischen Flüssigkeit, aufweist.

12. Transporteinrichtung nach Anspruch 11, **dadurch gekennzeichnet, dass** die Klemmeinrichtung (18.2) eine pneumatische Antriebseinrichtung (37) zur Betätigung der Klemmbacken (35) aufweist.

13. Produktionsanlage zur Herstellung von Produkten mit einer Transporteinrichtung zum Transport von Objekten nach einem der Ansprüche 1 bis 12, **dadurch gekennzeichnet, dass** eine Mehrzahl von Arbeitsstationen (A, B, C, D) vorgesehen ist, wobei jede Arbeitsstation zur Durchführung eines mindestens einen Arbeitsschritt umfassenden Arbeitsprozesses an mindestens einem Produkt, das auf einem Objekt-Trägerelement (6) angeordnet ist, ausgebildet ist.

14. Verfahren zum Transport von Objekten von Arbeitsstation zu Arbeitsstation einer Produktionsanlage mit folgenden Verfahrensschritten:

Anordnen einer Mehrzahl von Objekt-Trägerelementen zur Ablage von einem oder mehreren Objekten auf einem drehbaren Objektträger, Drehen des Objektträgers in aufeinanderfolgenden Arbeitstakten derart, dass die Objekt-Trägerelemente auf einer kreisförmigen Bewegungsbahn von Arbeitsstation zu Arbeitsstation transportiert werden, wobei

mindestens ein Objekt-Trägerelement der Mehrzahl von Objektträgerelementen auf dem Objektträger in Richtung der kreisförmigen Bewegungsbahn relativ zum Objektträger verschiebbar angeordnet wird, in einzelnen Arbeitstakten der aufeinanderfolgenden Arbeitstakte eine Relativbewegung von dem mindestens einen Objekt-Trägerelement und dem Objektträger verhindert wird, so dass das mindestens eine Objekt-Trägerelement von dem Objektträger mitgenommen und von Arbeitsstation zu Arbeitsstation bewegt wird, und in einzelnen Arbeitstakten der aufeinanderfolgenden Arbeitstakte eine Relativbewegung von dem mindestens einen Objekt-Trägerelement und dem Objektträger zugelassen wird und das mindestens eine Objekt-Trägerelement festgehalten wird, so dass das mindestens eine Trägerelement an einer Arbeitsstation verbleibt, **gekennzeichnet durch**

das Betätigen einer oder mehrerer einem Objekt-Trägerelement oder mehreren Objekt-Trägerelementen zugeordneten Aktor-Einheiten zum Einwirken auf ein Objekt, das einem Objekt-Trägerelement zugeordnet ist, oder zum Aufnehmen von Messwerten oder zur Betätigung von für die Steuerung des Prozesses relevanter Bauteile, die zusammen mit den Objekt-Trägerelementen bewegbar sind, und

das Versorgen der einen oder der mehreren Aktor-Einheiten mit einem oder mehreren Medien.

15. Verfahren nach Anspruch 14, **dadurch gekennzeichnet, dass** das eine oder die mehreren Medien von einer ortsfesten Versorgungseinrichtung über eine Drehdurchführung der einen oder der mehreren Aktor-Einheiten zugeführt werden.

**Claims**

1. Transport device for transporting objects from work station to work station of a production facility, comprising

an object carrier (3), on which a plurality of object carrier elements (6) for placing down one or more objects are arranged, the object carrier being rotatable about its central axis (23) in successive cycles, and the object carrier elements (6) being able to be transported from work station to work station on a circular movement path (8), and
a drive unit (5) for driving the object carrier (3), wherein

at least one object carrier element (6) of the plurality of object carrier elements is arranged on the object carrier (3) so as to be displaceable relative to the object carrier in the direction of the movement path (8) on which the object carrier elements can be transported from work station to work station (A, B, C, D),
the at least one object carrier element (6) is assigned a stationary retaining element (14) that can move between an active state, in which the object carrier element is held in place, and an inactive state, in which the object carrier element is released, **characterised in that**

the at least one object carrier element (6) is assigned a dog element (10) which can move between an active state, in which relative movement between the object carrier element and object carrier is prevented, and an inactive state, in which relative movement between the object carrier element and object carrier is permitted,
an actuation unit (11) for actuating the at least one dog element (10) and the at least one retaining element (14) and a control unit (15) for the actuation unit are provided, the control unit being designed such that, in some cycles of the successive cycles, the dog element (10) assumes an active state and the retaining element (14) assumes an inactive state such that the at least one object carrier element (6) is carried along by the object carrier (3) and moved from work station to work station (A, B, C, D), and, in some cycles of the successive cycles, the dog element (10) assumes an inactive state and the retaining element (14) assumes an active state such that the at least one object carrier element remains at a work station (A, B, C, D), and
one or more actuator units (18.1, 18.2; 12.1, 12.2) are arranged on or at an object carrier element (6) or a plurality of object carrier elements (6) for influencing an object assigned to an object carrier element or for recording of measurement values or for actuating components which are relevant for controlling the process, which units can move together with the object carrier element (6) or the object carrier elements (6).

2. Transport device according to claim 1, **characterised in that** the transport device comprises a stationary supply device (21) for supplying the actuator unit or the actuator units (18.1, 18.2; 12.1, 12.2) with one or more media, a media-provision device (A) being provided that is designed such that the supply device (21) can provide one or more media to the actuator unit or the actuator units (18.1, 18.2; 12.1, 12.2).

3. Transport device according to claim 2, **characterised in that** the media-provision device is designed as a rotary feedthrough (A).

4. Transport device according to claim 3, **characterised in that** the rotary feedthrough (A) comprises a stationary component (19) having one or more media inputs (20.1, 20.2, 20.3) for providing one or more media to supply one or more actuator units (18.1, 18.2; 12.1, 12.2) of an object carrier element (6.1, 6.2), and a plurality of components (24.1, 24.2, 24.3, 24.4) which are rotatable independently of one another about a common central axis (23) relative to the stationary component (19) and each have one or more media outputs (25.1, 25.2), the stationary component (19) and the rotary components (24.1, 24.2, 24.3, 24.4) being designed such that a media connection is formed between a media input of the stationary component and a media output of the rotary component, or a plurality of media inputs (20.1, 20.2, 20.3) of the stationary component (19) and a plurality of media outputs (25.1, 25.2) of the rotary components (24.1, 24.2, 24.3, 24.4).

5. Transport device according to claim 4, **characterised in that** each rotary component (24.1, 24.2, 24.3, 24.4) comprises a coupling element (27.1, 27.2) by means of which the rotary component is coupled to an object carrier element (6.1, 6.2).

6. Transport device according to either claim 4 or claim 5, **characterised in that** the stationary component (19) is designed as a cylindrical body and the rotary components (24.1, 24.2, 24.3, 24.4) are designed as bodies that surround the stationary component, the rotary components (24.1, 24.2, 24.3, 24.4) being arranged one above the other so as to be rotatable about the central axis (23) of the stationary component (19).

7. Transport device according to any of claims 4 to 6, **characterised in that** the rotary feedthrough (A) is arranged such that the stationary component (19) is arranged centrally on the object carrier (3) or penetrates the object carrier in the center, the rotary components (24.1, 24.2, 24.3, 24.4) being arranged at the same level or deeper or higher in relation to the object carrier elements (6).

8. Transport device according to any of claims 4 to 7, **characterised in that** the rotary components (24.1, 24.2, 24.3, 24.4) comprise one or more media outputs (25.1, 25.2), the one or more actuator units (18.1, 18.2; 12.1, 12.2) being connected to one or more media outputs (25.1, 25.2) of a rotary component (24.1, 24.2, 24.3, 24.4) by means of connection lines (26.1, 26.2), in particular flexible hose lines, in order to provide one or more media.

9. Transport device according to any of claims 1 to 8, **characterised in that** the object carrier (3) comprises a circular guide path (9) in which the object carrier elements (6) are guided in a freely movable manner.

10. Transport device according to any of claims 1 to 9, **characterised in that** the dog elements (10) are designed such that an interlocking and/or frictional connection can be established between a part of the object carrier element (6) and a part of the object carrier (3), and/or the retaining elements (10) are designed such that an interlocking and/or frictional connection can be established between a part of the object carrier element (6) and a stationary part (2).

11. Transport device according to any of claims 1 to 10, **characterised in that** an actuator unit is designed as a clamping device (18.2) that comprises clamping jaws (35) for clamping a part of a container, in particular a bag for receiving a medical fluid.

12. Transport device according to claim 11, **characterised in that** the clamping device (18.2) comprises a pneumatic drive device (37) for actuating the clamping jaws (35).

13. Production facility for producing products, comprising a transport device for transporting objects according to any of claims 1 to 12, **characterised in that** a plurality of work stations (A, B, C, D) is provided, each work station being designed to carry out at least one work process, which includes at least one work step, on at least one product arranged on an object carrier element (6).

14. Method for transporting objects from work station to work station of a production facility, comprising the following method steps:

arranging a plurality of object carrier elements for placing down one or more objects on a rotary object carrier,
rotating the object carrier in successive cycles in such a way that the object carrier elements are transported on a circular movement path from work station to work station,
wherein

at least one object carrier element of the plurality of object carrier elements is arranged on the object carrier so as to be displaceable relative to the object carrier in the direction of the circular movement path,
in some cycles of the successive cycles, relative movement between the at least one object carrier element and the object carrier is prevented such that the at least one object carrier element is carried along by the object carrier and moved from work station to work station, and
in some cycles of the successive cycles, relative movement between the at least one object carrier element and the object carrier is permitted and the at least one object carrier is held in place such that the at least one carrier element remains at a work station,
characterised through

the actuating of one or more actuator units that are assigned to one object carrier element or to a plurality of object carrier elements for influencing an object assigned to an object carrier element or for recording of measurement values or for actuating components which are relevant for controlling the process, which can move together with the object carrier elements, and

the supplying of the one or more actuator units with one or more media.

15. Method according to claim 14, **characterised in that** a stationary supply device supplies the one or more media to the one or more actuator units by means of a rotary feedthrough.


**Revendications**

1. Dispositif de transport pour le transport d'objets d'un poste de travail d'une installation de production à un autre, avec

un support d'objet (3), sur lequel sont disposés une pluralité d'éléments de support d'objet (6) pour le dépôt d'un ou plusieurs objets, dans lequel le support d'objet peut tourner autour de son axe central (23) dans des cycles de travail successifs et les éléments de support d'objet (6) peuvent être transportés sur une piste de déplacement circulaire (8) d'un poste de travail à un autre et

une unité d'entraînement (5) pour l'entraînement du support d'objet (3),

dans lequel

au moins un élément de support d'objet (6) de la pluralité d'éléments de support d'objet sur le support d'objet (3) est disposé de manière mobile par rapport au support d'objet en direction de la piste de déplacement (8) sur laquelle les éléments de support d'objet peuvent être transportés d'un poste de travail à un autre (A, B, C, D) et

à l'au moins un élément de support d'objet (6) correspond un élément de maintien fixe (14) qui peut être déplacé entre un état actif, dans lequel l'élément de support d'objet est maintenu, et un état non actif, dans lequel l'élément de support d'objet est libéré,

**caractérisé en ce que**

à l'au moins un élément de support d'objet (6) correspond un élément d'entraînement (10) qui peut être déplacé entre un état actif, dans lequel un mouvement relatif de l'élément de support d'objet et du support d'objet est empêché, et un état non actif, dans lequel un mouvement relatif de l'élément de support d'objet et du support d'objet est autorisé,

une unité d'actionnement (11) est prévue pour l'actionnement de l'au moins un élément d'entraînement (10) et de l'au moins un élément de maintien (14) et une unité de commande (15) est prévue pour l'unité d'actionnement, dans lequel l'unité de commande est conçue de façon à ce que, dans différents cycles de travail des cycles de travail successifs, l'élément d'entraînement (10) adopte un état actif et l'élément de maintien (14) adopte un état inactif, de façon à ce que l'au moins un élément de support d'objet (6) soit entraîné par le support d'objet (3) et déplacé d'un poste de travail à un autre (A, B, C, D) et, dans différents cycles de travail des cycles de travail successifs, l'élément d'entraînement (10) adopte un état inactif et l'élément de maintien (14) adopte un état actif, de façon à ce que l'au moins un élément de support d'objet reste sur un poste de travail (A, B, C, D) et

sur ou au niveau d'un élément de support d'objet (6) ou de plusieurs éléments de support d'objet (6) sont disposés une ou plusieurs unités d'actionneurs (18.1, 18.2 ; 12.1, 12.2) pour une action sur un objet correspondant à un élément de support d'objet (6) ou pour l'enregistrement de valeurs de mesure ou pour l'actionnement de composants importants pour le contrôle du processus, qui peuvent être déplacés conjointement avec l'élément de support d'objet (6) ou avec les éléments de support d'objet (6).

2. Dispositif de transport selon la revendication 1, **caractérisé en ce que** le dispositif de transport comprend un dispositif d'alimentation fixe (21) pour l'alimentation de l'unité d'actionneur ou des unités d'actionneurs (18.1, 18.2 ; 12.1, 12.2) avec un ou plusieurs fluides, dans lequel un dispositif d'introduction de fluide (A) est prévu, qui est conçu de façon à ce qu'un ou plusieurs fluides puissent être introduits par le dispositif d'alimentation (21) dans l'unité d'actionneur ou les unités d'actionneurs (18.1, 18.2; 12.1, 12.2).

3. Dispositif de transport selon la revendication 2, **caractérisé en ce que** le dispositif d'introduction de fluide est conçu comme un passage rotatif (A).

4. Dispositif de transport selon la revendication 3, **caractérisé en ce que** le passage rotatif (A) comprend un composant fixe (19) avec une ou plusieurs entrées de fluide (20.1, 20.2, 20.3) pour l'introduction d'un ou plusieurs fluides pour l'alimentation d'une ou plusieurs unités d'actionneurs 18.1, 18.2 ; 12.1, 12.2) d'un élément de support d'objet (6.1, 6.2) et plusieurs composants rotatifs (24.1, 24.2, 24.3, 24.4) pouvant tourner par rapport au composant fixe (19), indépendamment entre eux, autour d'un axe central commun (23), qui comprennent chacun une ou plusieurs sorties de fluide (25.1, 25.2), dans lequel le composant fixe (19) et les composants rotatifs (24.1, 24.2, 24.3, 24.4) sont conçus de façon à ce qu'une liaison fluidique soit établie entre une entrée de fluide du composant fixe et une sortie de fluide du composant rotatif ou entre plusieurs entrées de fluide (20.1, 20.2, 20.3) du composant fixe (19) et plusieurs sorties de fluide (25.1, 25.2) des composants rotatifs (24.1, 24.2, 24.3, 24.4).

5. Dispositif de transport selon la revendication 4, **caractérisé en ce que** chaque composant rotatif (24.1, 24.2, 24.3, 24.4) comprend un élément de couplage (27.1, 27.2) avec lequel le composant rotatif est couplé à un élément de support d'objet (6.1, 6.2).

6. Dispositif de transport selon la revendication 4 ou 5, **caractérisé en ce que** le composant fixe (19) est conçu comme un corps cylindrique et les composants rotatifs (24.1, 24.2, 24.3, 24.4) sont conçus comme des corps entourant le composant fixe, dans lequel les composants rotatifs (24.1, 24.2, 24.3, 24.4) sont superposés de manière rotative autour de l'axe central (23) du composant fixe (19).

7. Dispositif de transport selon l'une des revendications 4 à 6, **caractérisé en ce que** le passage rotatif (A) est disposé de façon à ce que le composant fixe (19) soit disposé de manière centrée sur le support d'objet (3) ou traverse le support d'objet en son centre, dans lequel les composants rotatifs (24.1, 24.2, 24.3, 24.4) sont disposés à la même hauteur ou plus bas ou plus haut par rapport aux éléments de support d'objet (6).

8. Dispositif de transport selon l'une des revendications 4 à 7, **caractérisé en ce que** les composants rotatifs (24.1, 24.2, 24.3, 24.4) comprennent une ou plusieurs sorties de fluide (25.1, 25.2), dans lequel l'unité d'actionneur ou les unités d'actionneurs (18.1, 18.2 ; 12.1, 12.2) pour l'introduction d'un ou plusieurs fluides par l'intermédiaire de conduites de liaison (26.1, 26.2), plus particulièrement des conduites flexibles, sont reliées avec une ou plusieurs sorties de fluides (25.1, 25.2) d'un composant rotatif (24.1, 24.2, 24.3, 24.4).

9. Dispositif de transport selon l'une des revendications 1 à 8, **caractérisé en ce que** le support d'objet (3) comprend une piste de guidage circulaire (9) dans laquelle les éléments de support d'objet (6) sont guidés de manière mobile librement.

10. Dispositif de transport selon l'une des revendications 1 à 9, **caractérisé en ce que** les éléments d'entraînement (10) sont conçus de façon à ce qu'une liaison par complémentarité de forme et/ou par force puisse être établie entre une partie de l'élément de support d'objet (6) et une partie du support d'objet (3) et/ou les éléments de maintien (10) sont conçus de façon à ce qu'une liaison par complémentarité de forme et/ou par force peut être établie entre une partie de l'élément de support d'objet (6) et une partie fixe (2).

11. Dispositif de transport selon l'une des revendications 1 à 10, **caractérisé en ce qu'**une unité d'actionneur est conçue comme un dispositif de serrage (18.2) qui comprend des mâchoires de serrage (35) pour le serrage d'une partie d'un récipient, plus particulièrement d'une poche pour le logement d'un liquide médical.

12. Dispositif de transport selon la revendication 11, **caractérisé en ce que** le dispositif de serrage (18.2) comprend un dispositif d'entraînement pneumatique (37) pour l'actionnement des mâchoires de serrage (35).

13. Installation de fabrication de produits avec un dispositif de transport pour le transport d'objets selon l'une des revendications 1 à 12, **caractérisée en ce qu'**une pluralité de postes de travail (A, B, C, D) sont prévues, dans lequel chaque poste de travail est conçu pour l'exécution d'un processus, comprenant au moins une étape de travail, sur au moins un produit qui est disposé sur un élément de support d'objet (6).

14. Procédé de transport d'objets d'un poste de travail à un autre d'une installation de production avec les étapes suivantes :

disposition d'une pluralité d'éléments de support d'objet pour le dépôt d'un ou de plusieurs objets sur un support d'objet rotatif, rotation du support d'objet dans des cycles de travail successifs, de façon à ce que les éléments de support d'objet soient transportés sur une piste de déplacement circulaire d'un poste de travail à un autre, dans lequel

au moins un élément de support d'objet de la pluralité d'éléments de support d'objet est disposé sur le support d'objet de manière mobile par rapport au support d'objet dans la direction de la piste de déplacement circulaire, dans différents cycles de travail des cycles de travail successifs, un mouvement relatif de l'au moins un élément de support d'objet et du support d'objet est empêché, de façon à ce que l'au moins un élément de support d'objet soit entraîné par le support d'objet et déplacé d'un poste de travail à un autre et dans différents cycles de travail des cycles de travail successifs, un mouvement relatif de l'au moins un élément de support d'objet et du support d'objet est autorisé et l'au moins un élément de support d'objet est maintenu de façon à ce que l'au moins un élément de support reste au niveau d'un poste de travail,
**caractérisé par**
l'actionnement d'une ou plusieurs unités d'actionneurs correspondant à un élément de support d'objet ou à plusieurs éléments de support d'objet pour une action sur un objet correspondant à un élément de support d'objet ou pour l'enregistrement de valeurs de mesure ou pour l'actionnement de composants importants pour le contrôle du processus, qui peuvent être déplacés conjointement avec les éléments de support d'objet et
l'alimentation de l'unité d'actionneur ou des plusieurs unités d'actionneurs avec un ou plusieurs fluides.

15. Procédé selon la revendication 14, **caractérisé en ce que** le ou les plusieurs fluides sont introduits par un dispositif d'alimentation fixe par l'intermédiaire d'un passage rotatif dans l'unité d'actionneur ou dans plusieurs unités d'actionneurs.

**Fig. 1**

**Fig. 2**

**Fig. 3**

**Fig. 4**

A

6.4

6.1

6.3

7.2

6.2

D

B

7.3

7.4

C

**Fig. 5**

A

6.4

6.1

6.3

6.2

7.3

D

B

7.4

7.5

C

**Fig. 6**

Fig. 7

Fig. 8

**Fig. 9**

Fig. 10

**24.1, 24.2, 24.3, 24.4**

25.2

25.1

30.2

30.1

29.1 29.2

19

28.2

28.1

**Fig. 11**

**32.2**

**24.1, 24.2, 24.3, 24.4**

**32.1**

34.2

34.1

33.2

33.1

19

31.2

31.1

**Fig. 12**

18.2

36    35    35    36

37    37

6.2

**Fig. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2045428 A5
- DE 102016004335